# EUROPEAN PATENT APPLICATION

(11) **EP 4 506 501 A1**
(43) Date of publication of application: **12.02.2025**
(21) Application number: 23831735.8
(22) Date of filing: 23.05.2023
(51) Int. Cl.: D06F 39/10, D06F 39/08, D06F 39/02, B01D 35/02, B01D 29/62, D06F 33/34, D06F 33/42, D06F 105/02, D06F 105/08

(54) **WASHING MACHINE AND CONTROLLING METHOD OF WASHING MACHINE**

(30) Priority: 28.06.2022 KR 20220079295; 27.07.2022 KR 20220093493; 11.10.2022 KR 20220130087
(71) Applicant: Samsung Electronics Co., Ltd., Suwon-si, Gyeonggi-do 16677 (KR)
(72) Inventor: LEE, Kanghyun, Suwon-si Gyeonggi-do 16677 (KR); SEO, Dongpil, Suwon-si Gyeonggi-do 16677 (KR); CHO, Youngjin, Suwon-si Gyeonggi-do 16677 (KR); SO, Sangyoung, Suwon-si Gyeonggi-do 16677 (KR)
(74) Representative: Gulde & Partner
(86) International application number: PCT/KR2023/007014
(87) International publication number: WO 2024/005371

(57) **Abstract**

This washing machine comprises: a housing; a tub provided within the housing; a detergent supplier connected to the tub; and a water supply guide provided to guide water to the detergent supplier. The detergent supplier comprises: a drawer capable of accommodating a detergent; a filter detachably installed to the drawer; and a drawer case provided to be able to accommodate the drawer. The drawer case comprises a washing hole through which a part of water supplied to the drawer case is guided to the filter and which is provided to be able to supply the water to the outer side of the filter opposite to the inner side of the filter where foreign matter is collected.

## Description

### [Technical Field]

The present disclosure relates to a washing machine having a filter and a control method of the washing machine.

### [Background Art]

A washing machine is an apparatus for performing washing through friction by stirring laundry, water, and a detergent together inside a tub with a driving force of a driving motor.

Operations that are performed by a washing machine include a washing operation of supplying a detergent and water to a tub accommodating laundry and washing the laundry while rotating a drum, a rinsing operation of rinsing the laundry by supplying water to the tub and rotating the drum, and a dehydrating operation of discharging water from the tub and rotating the drum to remove water from the laundry, regardless of the kind of the washing machine.

The washing machine includes a pump device for discharging water stored in the tub to the outside of the washing machine during the washing operation, the rinsing operation, and/or the dehydrating operation. The pump device is configured to return water discharged from the tub to the tub during the washing operation and/or the rinsing operation.

The washing machine may include a filter for filtering out foreign materials included in water discharged from the pump device.

### [Disclosure]

### [Technical Problem]

An aspect of the disclosure provides a washing machine capable of increasing a replacement cycle of a filter.

Technical problems to be achieved by the present specification are not limited to the above-mentioned technical problems, and other technical problems not mentioned will be clearly understood by those skilled in the art to which the disclosure belongs from the following description.

### [Technical Solution]

A washing machine according to a concept of the disclosure may include a housing, a tub provided inside the housing, a detergent supplier connected to the tub, and a water supply guide configured to guide water to the detergent supplier. The detergent supplier may include a drawer configured to accommodate a detergent, a filter detachably installed in the drawer, and a drawer case configured to accommodate the drawer. The drawer case may include a washing hole configured to guide a part of water supplied to the drawer case to the filter and supply water to an outer side of the filter, the outer side being opposite to an inner side of the filter where foreign materials are collected.

The drawer may include a detergent accommodating portion configured to accommodate the detergent. The drawer case may include a water supply hole configured to guide a part of water supplied to the drawer case to the detergent accommodating portion.

The washing machine may further include a pump device configured to move water discharged from the tub to the tub. The filter may be positioned to filter water moving from the pump device to the tub.

The drawer case may include a tub port configured to discharge water supplied to the drawer through the water supply hole, together with a detergent, to the tub. The tub port may be configured to guide water supplied to the filter through the washing hole to the tub.

The water supply guide may be positioned closer to the washing hole than the water supply hole.

The washing machine may further include a valve configured to open or close the water supply guide, and a controller configured to control the valve. The controller may be configured to open the valve for a preset time during a drain operation.

The valve may be an electronic valve of which an opening rate is adjusted. The controller may be configured to fully open the electronic valve during a water supply operation, and partially open the electronic valve for the preset time during the drain operation.

The water supply guide may include a first guide configured to guide water to the water supply hole and a second guide configured to guide water to the washing hole.

The washing machine may further include a first valve configured to open or close the first guide, a second valve configured to open or close the second guide, and a controller configured to control the first valve and the second valve.

The controller may be configured to open the second valve for a preset time based on reception of a user input to clean the filter.

The controller may be configured to open the second valve for a preset time during a drain operation.

The washing machine may further include a pump device configured to move water discharged from the tub to the tub. The filter may be positioned to filter water moving from the pump device to the tub. The controller may be configured to open the second valve for a preset time based on a termination operation of the pump device.

The filter may be positioned behind the detergent accommodating portion. The water supply hole may be positioned above the detergent accommodating portion. The washing hole may be positioned above the filter.

The washing machine may further include a pump device configured to move water discharged from the tub to outside of the housing. The filter may be positioned to filter water moving from the pump device to the outside of the housing.

The drawer case may include a case outlet configured to discharge water passed through the filter to outside of the drawer case. The case outlet may be configured to guide water supplied to the filter through the washing hole to the outside of the drawer case.

A washing machine according to a concept of the disclosure may include a tub and a detergent supplier connected to the tub. The detergent supplier may include a drawer case, a drawer including a detergent accommodating portion that accommodates a detergent and configured to be inserted into the drawer case or withdrawn from the drawer case, and a filter detachably installed in the drawer. The drawer case may include a water supply hole configured to guide a part of water supplied to the drawer case to the detergent accommodating portion, and a washing hole configured to guide another part of the water supplied to the drawer case to the filter and supply water to an outer side of the filter, the outer side being opposite to an inner side of the filter where foreign materials are filtered out.

The drawer case may include a tub port configured to discharge a detergent of the drawer to the tub, wherein the tub port may guide water supplied to the filter through the washing hole to the tub.

The drawer case may include a case outlet configured to discharge water passed through the filter to outside of the drawer case, wherein the case outlet may guide water supplied to the filter through the washing hole to the outside of the drawer case.

A control method of a washing machine including a detergent supplier including a drawer and a filter, according to a concept of the disclosure, may include opening a water supply guide for supplying water to the detergent supplier for a preset time during a drain operation.

The water supply guide may include a first guide configured to guide water to the drawer and a second guide to guide water to the filter. The opening of the water supply guide may include opening the second guide for the preset time during the drain operation.

### [Advantageous Effects]

According to a concept of the disclosure, a washing machine may increase a replacement cycle of a filter by supplying water to the filter to wash a part of a filter surface.

Effects that may be achieved by the disclosure are not limited to the above-mentioned effects, and other effects not mentioned will be clearly understood by one of ordinary skill in the technical field to which the disclosure belongs from the following descriptions.

### [Description of Drawings]

FIG. 1 shows a washing machine according to an embodiment.
FIG. 2 shows a cross section of the washing machine shown in FIG. 1.
FIG. 3 shows a detergent supply device shown in FIG. 1.
FIG. 4 is an exploded view of the detergent supply device shown in FIG. 3.
FIG. 5 shows a drawer shown in FIG. 4.
FIG. 6 shows a flow of water that is filtered by passing through a filter, in a cross section of the detergent supply device shown in FIG. 3.
FIG. 7 shows a flow of water that washes the filter, in the cross section of the detergent supply device shown in FIG. 3.
FIG. 8 is a control block diagram of a washing machine according to an embodiment.
FIG. 9 shows a cross section of a washing machine according to an embodiment.
FIG. 10 is an exploded view of a detergent supply device shown in FIG. 9.
FIG. 11 shows a drawer shown in FIG. 9.
FIG. 12 shows a flow of water that is filtered by passing through a filter, in a cross section of the detergent supply device shown in FIG. 10.
FIG. 13 shows a flow of water that washes the filter, in the cross section of the detergent supply device shown in FIG. 10.
FIG. 14 is a control block diagram of a washing machine according to an embodiment.
FIG. 15 shows a cross section of a washing machine according to an embodiment.
FIG. 16 is an exploded view of a detergent supply device shown in FIG. 15.
FIG. 17 shows a drawer shown in FIG. 14.
FIG. 18 shows a state in which a circulation door of the drawer shown in FIG. 17 closes a circulation opening.
FIG. 19 shows a flow of water that flows into a pump device and then is discharged to a tub, in a cross section of the detergent supply device shown in FIG. 16.
FIG. 20 shows a flow of water that washes a filter and then is discharged to the tub, in the cross section of the detergent supply device shown in FIG. 16.
FIG. 21 shows a flow of water that is supplied from the pump device and then discharged to outside of the washing machine, in the cross section of the detergent supply device shown in FIG. 16.
FIG. 22 shows a flow of water that washes the filter and then is discharged to the outside of the washing machine, in the cross section of the detergent supply device shown in FIG. 16.
FIG. 23 is a control block diagram of a washing machine according to an embodiment.
FIG. 24 shows a cross section of a washing machine according to an embodiment.
FIG. 25 is an exploded view of a detergent supply device shown in FIG. 24.
FIG. 26 shows a flow of water that is supplied to a detergent accommodating portion, in a cross section of the detergent supply device shown in FIG. 25.
FIG. 27 shows a flow of water that is filtered by passing through a filter, in the cross section of the detergent supply device shown in FIG. 25.
FIG. 28 shows a flow of water that washes the filter, in the cross section of the detergent supply device shown in FIG. 25.
FIG. 29 is a control block diagram of a washing machine according to an embodiment.
FIG. 30 shows a cross section of a washing machine according to an embodiment.
FIG. 31 is an exploded view of a detergent supply device shown in FIG. 30.
FIG. 32 shows a flow of water that is supplied to a detergent accommodating portion, in a cross section of a detergent supply device shown in FIG. 30.
FIG. 33 shows a flow of water that is filtered by passing through a filter, in the cross section of the detergent supply device shown in FIG. 30.
FIG. 34 shows a flow of water that washes the filter, in the cross section of the detergent supply device shown in FIG. 30.
FIG. 35 is a control block diagram of a washing machine according to an embodiment.
FIG. 36 shows a cross section of a washing machine according to an embodiment.
FIG. 37 is an exploded view of a detergent supply device shown in FIG. 36.
FIG. 38 shows a flow of water that is supplied to a detergent accommodating portion, in a cross section of the detergent supply device shown in FIG. 37.
FIG. 39 shows a flow of water that is supplied from a pump device and then discharged to a tub, in the cross section of the detergent supply device shown in FIG. 37.
FIG. 40 shows a flow of water that washes a filter and then is discharged to the tub, in the cross section of the detergent supply device shown in FIG. 37.
FIG. 41 shows a flow of water that is supplied from the pump device and then is discharged to outside of the washing machine, in the cross section of the detergent supply device shown in FIG. 37.
FIG. 42 shows a flow of water that washes the filter and then is discharged to the outside of the washing machine, in the cross section of the detergent supply device shown in FIG. 37.
FIG. 43 is a control block diagram of a washing machine according to an embodiment.
FIG. 44 is a control block diagram showing a configuration of a washing machine according to various embodiments.
FIG. 45 shows an example of a washing cycle according to an embodiment.
FIG. 46 is a flowchart illustrating an example of a control method of a washing machine according to various embodiments.
FIG. 47 is a flowchart illustrating an example of a control method of a washing machine according to various embodiments.
FIG. 48 is a control block diagram showing a configuration of a washing machine according to various embodiments.
FIG. 49 is a flowchart showing an example of a control method of a washing machine according to various embodiments.

### [Modes of the Invention]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

**In** this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

Terms such as "first", "second", or "1^{st}" or "2^{nd}" may be used simply to distinguish a component from other components, without limiting the component in other aspects (e.g., importance or order).

A certain (e.g., a first) component is referred to as "coupled" or "connected" with or without the terms "functionally" or "communicatively" to another (e.g., second) component. When mentioned, it means that any of the above components can be connected to the other components directly (e.g., by wire), wirelessly, or via a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

A washing machine according to various embodiments may be an example of a clothes processing apparatus.

A washing machine according to various embodiments may include a top-loading washing machine in which an inlet for allowing a user to put laundry in or take laundry out faces upward, or a front-loading washing machine in which an inlet for allowing a user to put laundry in or take laundry out faces forward. The washing machine according to various embodiments may include another type of washing machine, other than the top-loading washing machine and the front-loading washing machine.

The top-loading washing machine may wash laundry by using a water stream generated by a rotating body such as a pulsator. The front-loading washing machine may wash laundry by rotating a drum to repeatedly lift and drop the laundry. The front-loading washing machine may include a lifter for lifting laundry. The washing machine according to various embodiments may include a washing machine using another washing method other than the above-described washing methods.

Hereinafter, a washing machine according to various embodiments will be described in detail with reference to the accompanying drawings.

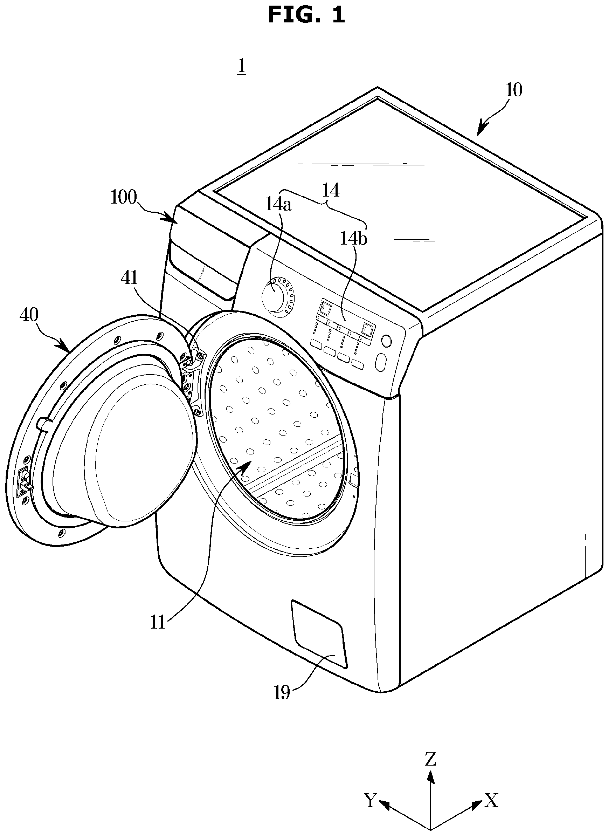

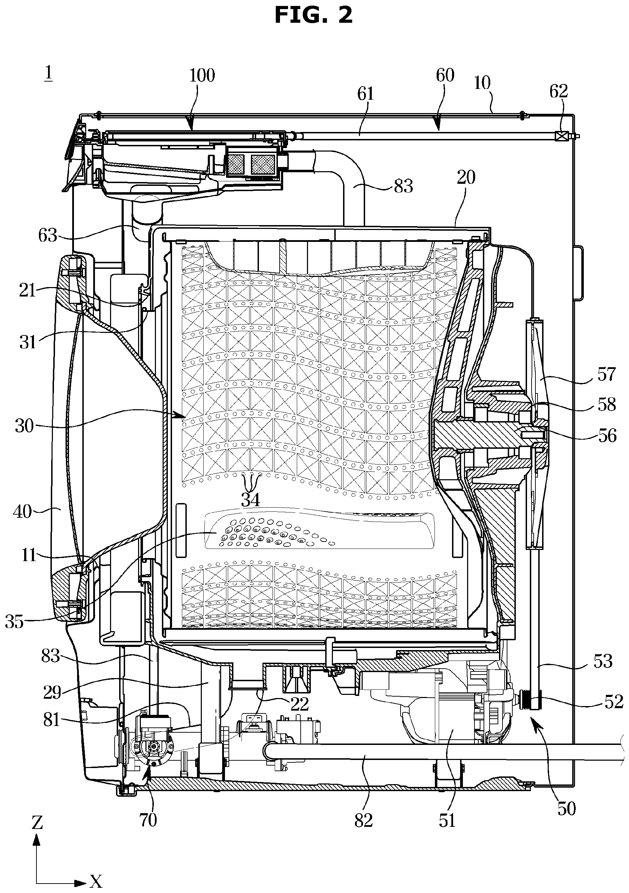

FIG. 1 shows a washing machine according to an embodiment. FIG. 2 shows a cross section of the washing machine shown in FIG. 1.

Referring to FIGS. 1 and 2, a washing machine 1 according to various embodiments may include a housing 10 that accommodates various components therein.

The housing 10 may include a housing opening 11 for allowing an access to inside of a drum 30. A tub 20 may include a tub opening 21 corresponding to the housing opening 11. The drum 30 may include a drum opening 31 corresponding to the housing opening 11 and the tub opening 21. Laundry may be put in the drum 30 or taken out of the drum 30 through the housing opening 11, the tub opening 21, and the drum opening 31. The housing opening 11 may face substantially forward. The tub opening 21 may face substantially forward. The drum opening 31 may face substantially forward.

The washing machine 1 may include a control panel 14. The control panel 14 may be provided on the housing 10. The control panel 14 may include an input device 14a for receiving an operation command from a user, and a display 14b for displaying operation information of the washing machine 1. The control panel 14 may provide a user interface for enabling a user to interact with the washing machine 1.

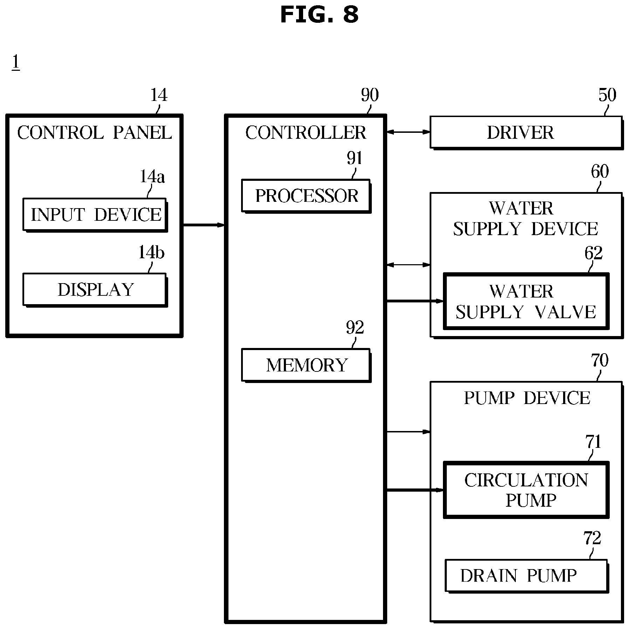

The input device 14a may provide an electrical output signal corresponding to a user input to a controller 90 (see FIGS. 8, 14, 23, 29, 35, and 43). The input device 14a may include, for example, a power button, a start button, a course selection dial (or a course selection button), and a washing/rinsing/dehydrating setting button. An input button may include, for example, a tact switch, a push switch, a slide switch, a toggle switch, a micro switch, or a touch switch.

The display 14b may receive a signal from the controller 90, and display information corresponding to the received signal. The display 14b may include a screen that displays a washing course selected by a rotation of the course selection dial (or, pressing of the course selection button) and an operation time of the washing machine 1, and an indicator that displays a washing setting/rinsing setting/dehydrating setting selected by the setting button. The display 14b may include, for example, a Liquid Crystal Display (LCD) panel, a Light Emitting Diode (LED) panel, etc.

The washing machine 1 may include a door 40 for opening or closing the housing opening 11 provided in the housing 10. The door 40 may be rotatably installed on the housing 10 by a hinge 41. At least a portion of the door 40 may be transparent or translucent to show inside of the housing 10.

The washing machine 1 may include the tub 20 provided inside the housing 10 to store water. The tub 20 may be supported on an inner side of the housing 10. The tub 20 may be substantially in a shape of a cylinder of which one side opens.

The tub 20 may be elastically supported from the housing 10 by a damper 29. The damper 29 may connect the tub 20 to the housing 10. The damper 29 may attenuate vibration generated during a rotation of the drum 30 by absorbing vibration energy between the tub 20 and the housing 10 upon transferring of the vibration to the tub 20 and/or the housing 10.

The washing machine 1 may include the drum 30 that accommodates laundry. The drum 30 may be rotatably provided inside the tub 20. The drum 30 may perform washing, rinsing, and/or dehydrating, while rotating inside the tub 20. The drum 30 may include a through hole 34 that connects an inside space of the drum 30 to an inside space of the tub 20. The drum 30 may be substantially in a shape of a cylinder of which one side opens. On an inner circumferential surface of the drum 30, a plurality of lifters 35 may be provided to lift and drop laundry upon a rotation of the drum 30.

The washing machine 1 may include a driver 50 configured to rotate the drum 30. The driver 50 may include a driving motor 51, and a rotating shaft 56 for transferring a driving force generated from the driving motor 51 to the drum 30. The rotating shaft 56 may penetrate the tub 20 and be connected to the drum 30. The driver 50 may rotate the drum 30 forward or backward to perform a washing, rinsing, and/or dehydrating operation.

The drum 30 may be connected to the driving motor 51 through the rotating shaft 56, and according to connection types between the rotating shaft 56 and the driving motor 51, there may be a direct driving type in which the rotating shaft 56 is directly connected to the driving motor 51 to rotate the drum 30, and an indirect driving type in which pulleys 52 and 57 are connected between the driving motor 51 and the rotating shaft 56 to drive the drum 30. FIG. 2 shows a case in which the washing machine 1 is the indirect driving type. However, the washing machine 1 according to various embodiments may be the direct driving type.

The washing machine 1 according to various embodiments may be the indirect driving type. One end of the rotating shaft 56 may be connected to a rear portion of the drum 30, and the other end of the rotating shaft 56 may be connected to a shaft pulley 57 to obtain a driving force from the driving motor 51. A motor pulley 52 may be formed on a rotating shaft of the driving motor 51. A driving belt 53 may be provided between the motor pulley 52 and the shaft pulley 57, and the rotating shaft 56 may be driven by the driving belt 53.

The driving motor 51 may be positioned below the tub 20. The driving belt 53 may drive the rotating shaft 56 while rotating clockwise or counterclockwise in an up-down direction of the tub 20.

In the rear portion of the tub 20, a bearing housing 58 for rotatably supporting the rotating shaft 56 may be installed. The bearing housing 58 may be made of an aluminum alloy. The bearing housing 58 may be inserted into the rear portion of the tub 20 upon injection-molding of the tub 20.

A water supply device 60 may supply water to the tub 20. The water supply device 60 may include a water supply guide 61, and a water supply valve 62 provided in the water supply guide 61. The water supply guide 61 may be connected to an external water supply source. The water supply guide 61 may extend from the external water supply source to a detergent supply device 100 and/or the tub 20. The water supply guide 61 may guide water to the detergent supply device 100. Water may be supplied to the tub 20 via the detergent supply device 100. Water may be supplied to the tub 20 without passing through the detergent supply device 100.

The water supply valve 62 may open or close the water supply guide 61 in response to an electrical signal from the controller 90. The water supply valve 62 may allow or block supply of water from the external water supply source to the tub 20. The water supply valve 62 may include, for example, a solenoid valve that is opened or closed in response to an electrical signal.

The washing machine 1 may include a pump device 70. The pump device 70 may discharge water accommodated in the tub 20 to the outside. The pump device 70 may be connected to the tub 20.

The washing machine 1 may include a connecting guide 81 connecting the tub 20 to the pump device 70 such that water in the tub 20 flows into the pump device 70. The connecting guide 81 may guide water discharged from the tub 20 to the pump device 70. In a lower portion of the tub 20, a drain 22 for draining water stored in the tub 20 to the outside of the tub 20 may be formed. The drain 22 may be connected to the connecting guide 81.

The washing machine 1 may include a drain guide 82 extending from the pump device 70 to outside of the housing 10 to discharge water entered the pump device 70 to the outside of the housing 10. The drain guide 82 may guide water of the pump device 70 to the outside of the housing 10. The drain guide 82 may guide water pumped by a drain pump 72 (see FIG. 8) provided in the pump device 70.

To circulate water entered the pump device 70 to the tub 20, the washing machine 1 may include a circulation guide 83 extending from the pump device 70. The circulation guide 83 may be connected to the detergent supply device 100. The circulation guide 83 may guide water pumped by a circulation pump 71 (see FIG. 8) provided in the pump device 70. Water pumped by the circulation pump 71 of the pump device 70 may flow into the tub 20 via the detergent supply device 100.

The washing machine 1 may include the detergent supply device 100 configured to supply a detergent to the tub 20. The detergent supply device 100 may be configured to supply a detergent to the tub 20 during a water supply process. Water supplied through the water supply guide 61 may be mixed with a detergent via the detergent supply device 100. The water mixed with the detergent may be supplied to the tub 20. The detergent supply device 100 may be connected to the tub 20 through a tub guide 63. The detergent may include a powdered detergent, a liquid detergent, a pre-wash detergent, fabric softener, or bleach. The detergent may include a laundry detergent, a dryer rinse, a deodorizer, a disinfectant or an air freshener.

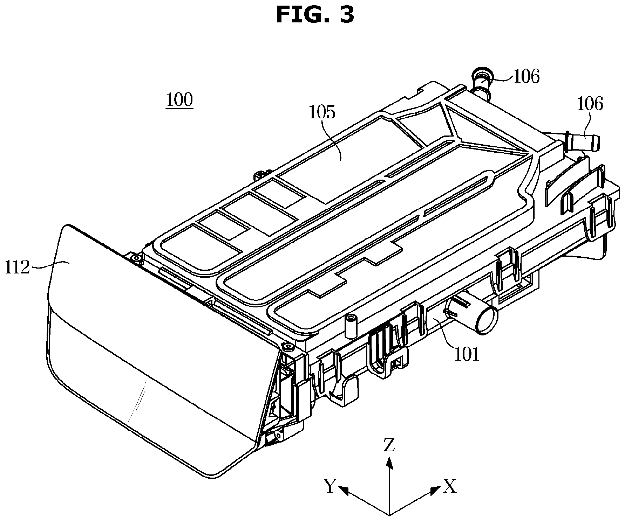

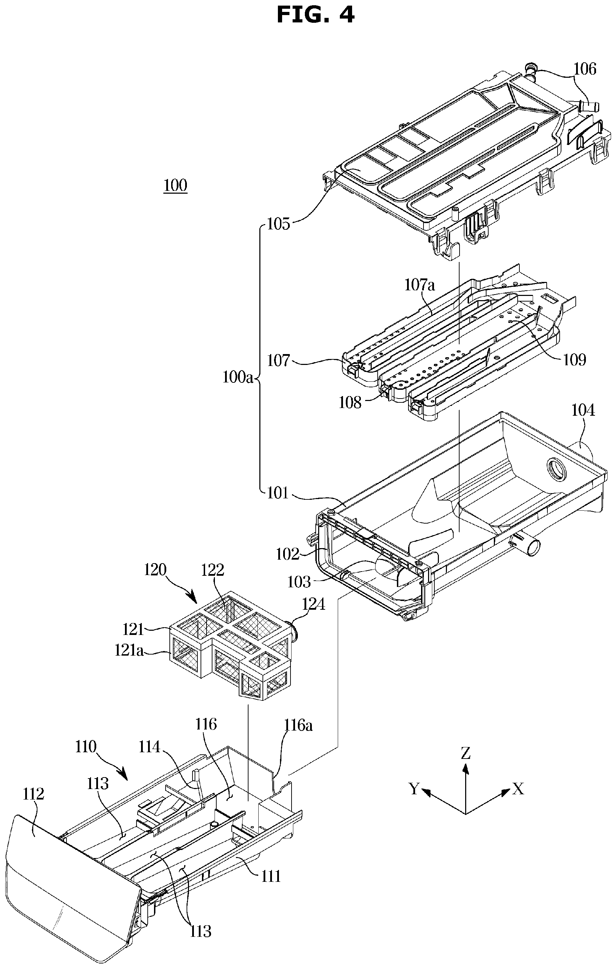

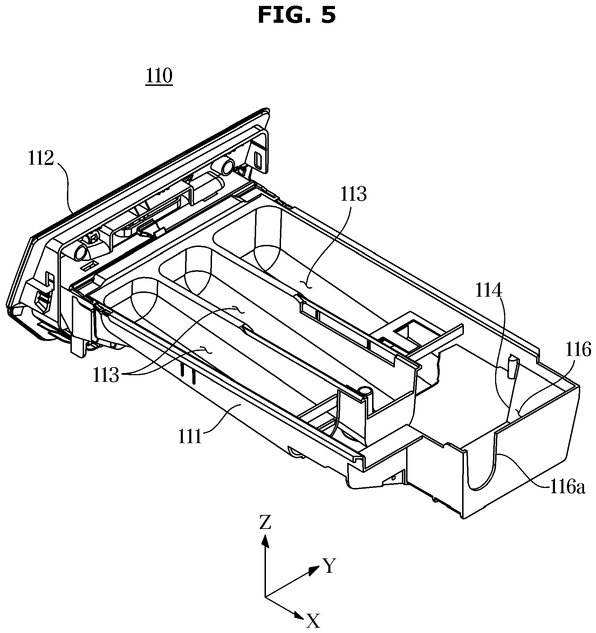

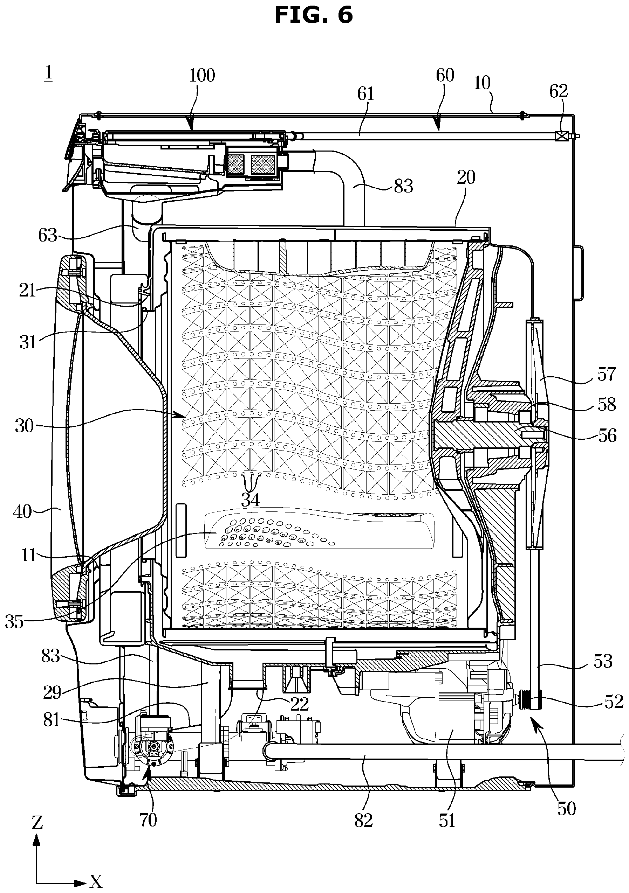

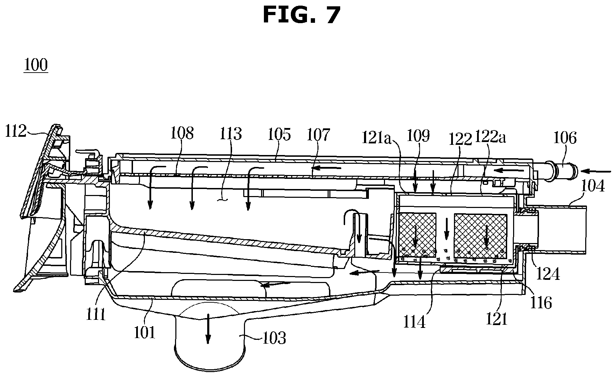

FIG. 3 shows a detergent supply device shown in FIG. 1. FIG. 4 is an exploded view of the detergent supply device shown in FIG. 3. FIG. 5 shows a drawer shown in FIG. 4. FIG. 6 shows a flow of water that is filtered by passing through a filter, in a cross section of the detergent supply device shown in FIG. 3. FIG. 7 shows a flow of water that washes the filter, in the cross section of the detergent supply device shown in FIG. 3.

Referring to FIGS. 3 to 5, the detergent supply device 100 may include a drawer case 100a installed in the housing 10. The drawer case 100a may accommodate at least a portion of a drawer 110. The drawer case 100a may include a case body 101, a case cover 105, and a case guide 107. The case body 101, the case cover 105, and the case guide 107 may be integrated into one body.

The case body 101 may include a drawer opening 102 through which a portion of the drawer 110 passes. The drawer opening 102 may open forward. An open upper side of the case body 101 may be covered by the case cover 105.

The case body 101 may include a tub port 103 connected to the tub guide 63. The tub port 103 may be positioned in a lower portion of the case body 101. According to the tub port 103 being connected to the tub guide 63, the drawer case 100a may be connected to the tub 20. Water and/or a detergent in the detergent supply device 100 may be supplied to the tub 20 through the tub port 103. The tub port 103 may discharge water supplied to the drawer 110 through a water supply hole 108, together with a detergent, to the tub 20. The tub port 103 may guide water supplied to a filter 120 through a washing hole 109 to the tub 20.

The case body 101 may include a case inlet 104 connected to the circulation guide 83. The case inlet 104 may be positioned in a rear portion of the case body 101. According to the case inlet 104 being connected to the circulation guide 83, the drawer case 100a may be connected to the pump device 70. Water discharged from the pump device 70 may flow into the detergent supply device 100 through the case inlet 104.

The case cover 105 may cover the open upper side of the case body 101. The case cover 105 may be installed on the case body 101. The case cover 105 may include a water supply port 106. The water supply port 106 may be connected to the water supply guide 61. According to the water supply port 106 being connected to the water supply guide 61, water provided from a water supply source may be supplied to the detergent supply device 100. The water supply port 106 may include a water supply port for hot water and a water supply port for cold water.

The case guide 107 may be installed in the case body 101. The case guide 107 may be installed in the case cover 105. The case guide 107 may be positioned between the case body 101 and the case cover 105. The case guide 107 may guide water supplied to the detergent supply device 100 to a detergent accommodating portion 113 and/or the filter 120, together with the case cover 105. The case guide 107 may include a guide rib 107a for guiding water received through the water supply port 106.

The case guide 107 may include the water supply hole 108 that communicates with the detergent accommodating portion 113. The water supply hole 108 may be formed toward the detergent accommodating portion 113. The water supply hole 108 may be positioned above the detergent accommodating portion 113. The water supply hole 108 may discharge a part of water supplied to the detergent supply device 100 through the water supply port 106 to the detergent accommodating portion 113.

The case guide 107 may include the washing hole 109 formed to communicate with a filter installing portion 116. The washing hole 109 may be positioned behind the water supply hole 108. The washing hole 109 may be formed toward the filter installing portion 116. The washing hole 109 may be positioned above the filter installing portion 116. The washing hole 109 may discharge a part of water supplied to the detergent supply device 100 through the water supply port 106 to the filter installing portion 116. The washing hole 109 may discharge a part of water supplied to the detergent supply device 100 through the water supply port 106 to the filter 120 positioned in the filter installing portion 116. The washing hole 109 may guide a part of water supplied to the drawer case 100a to the filter 120. The washing hole 109 may supply water supplied to the drawer case 100a to an outer side of the filter 120, which is opposite to an inner side of the filter 120 where foreign materials are collected.

The water supply guide 61 may be positioned closer to the washing hole 109 than the water supply hole 108.

The detergent supply device 100 may include the drawer 110 that is accommodated in the drawer case 100a. At least a portion of the drawer 110 may be accommodated in the drawer case 100a. The drawer 110 may be inserted into or taken out of the drawer case 100a.

The drawer 110 may include a drawer body 111 that is accommodated in the drawer case 100a, and a drawer handle 112. The drawer body 111 may be installed on the drawer handle 112. The drawer handle 112 may be exposed to the outside of the housing 10. A user may take the drawer 110 out of the drawer case 100a by using the drawer handle 112.

The drawer body 111 may include the detergent accommodating portion 113. The detergent accommodating portion 113 may accommodate a detergent. FIG. 4 shows a plurality of detergent accommodating portions 113. However, a single detergent accommodating portion 113 may be provided. The user may take the drawer 110 out of the drawer case 100a to put a detergent in the detergent accommodating portion 113.

The drawer body 111 may include a drawer outlet 114 for discharging a detergent and/or water in the detergent accommodating portion 113 to the drawer case 100a. The detergent accommodating portion 113 may communicate with a space between the drawer 110 and the drawer case 100a by the drawer outlet 114. The drawer outlet 114 may be positioned between the detergent accommodating portion 113 and the filter installing portion 116.

The drawer body 111 may include the filter installing portion 116 formed to accommodate the filter 120. The filter installing portion 116 may be positioned behind the detergent accommodating portion 113. A size of the filter installing portion 116 may be greater than a size of the filter 120 to form a space for water passed through the filter 120 between the filter installing portion 116 and the filter 120.

The drawer outlet 114 may discharge water in the filter installing portion 116 to the drawer case 100a. The filter installing portion 116 may communicate with the space between the drawer 110 and the drawer case 100a by the drawer outlet 114.

The filter installing portion 116 may include a filter inlet accommodating portion 116a in which a filter inlet 124 of the filter 120 is accommodated. The filter inlet accommodating portion 116a may extend in a direction in which the filter 120 is installed in the filter installing portion 116. The filter inlet accommodating portion 116a may be positioned in a rear portion of the filter installing portion 116. The filter inlet accommodating portion 116a may be positioned to correspond to the case inlet 104.

The detergent supply device 100 may include the filter 120 detachably installed in the drawer 110. The filter 120 may be installed in the filter installing portion 116 of the drawer 110. The filter 120 may be positioned behind the detergent accommodating portion 113. The filter 120 may filter out foreign materials from water discharged from the pump device 70. The filter 120 may be positioned to filter water moving from the pump device 70 to the tub 20.

The filter 120 may include a filter body 121 that forms a space for collecting foreign materials therein. The filter body 121 may include a body opening 121a for communicating an inside space with the outside. The body opening 121a may be positioned in at least one side of the filter body 121. The body opening 121a may be positioned in one side of the filter body 121, which faces the washing hole 109.

The filter 120 may include a filter portion 122 provided in the body opening 121a of the filter body 121. The filter portion 122 may include a mesh filter. The filter portion 122 may filter out foreign materials having fine sizes. At least a part of the filter portion 122 may face the washing hole 109.

The filter 120 may include the filter inlet 124 into which water discharged from the pump device 70 flows. Water discharged from the pump device 70 may be filtered by flowing into the filter 120 through the filter inlet 124 and then passing through the filter portion 122. The filter inlet 124 may be connected to the case inlet 104. A sealing member may be provided between the filter inlet 124 and the case inlet 104.

Referring to FIGS. 2 and 6, the washing machine 1 according to various embodiments may filter out, while circulating water in the tub 20, foreign materials from the circulating water.

Water discharged from the pump device 70 toward the tub 20 may be guided along the circulation guide 83. The water guided along the circulation guide 83 may flow into the detergent supply device 100 through the case inlet 104. The water flowed through the case inlet 104 may flow into an inside space of the filter 120 through the filter inlet 124 connected to the case inlet 104. While the water flowed into the inside space of the filter 120 moves to outside of the filter 120 through the filter portion 12, foreign materials may be filtered out form the water.

The filter portion 122 may include a filter side 122a that faces inside of the filter 120. While water flowed through the filter inlet 124 moves from the inside of the filter 120 to the outside, foreign materials may be filtered out from the water, and the foreign materials filtered out by passing through the filter portion 122 may be collected on the filter side 122a of the filter portion 122.

The water which has passed through the filter 120 and from which foreign materials have been filtered out may be discharged to the space between the drawer body 111 and the case body 101 through the drawer outlet 114. The water discharged to the space between the drawer body 111 and the case body 101 may be discharged through the tub port 103. The water discharged through the tub port 103 may be guided to the tub 20 through the tub guide 63.

According to this configuration, because the washing machine 1 according to various embodiments filters out foreign materials from water circulating through the tub 20, an amount of foreign materials that are discharged from the washing machine 1, particularly, an amount of foreign materials having fine sizes may be reduced.

Referring to FIGS. 2 and 7, the washing machine 1 according to various embodiments may wash the filter 120 while water is supplied to the detergent supply device 100 by the water supply device 60.

Water supplied by the water supply device 60 may flow into the inside of the detergent supply device 100 through the water supply port 106. The water flowed into the detergent supply device 100 may be guided by the guide rib 107a in a space between the case cover 105 and the case guide 107.

A part of the water in the space between the case cover 105 and the case guide 107 may be discharged to the detergent accommodating portion 113 through the water supply hole 108. The water discharged to the detergent accommodating portion 113 may be discharged, together with a detergent in the detergent accommodating portion 113, to the space between the drawer body 111 and the case body 101 through the drawer outlet 114. The water discharged to the space between the drawer body 111 and the case body 101 may be discharged through the tub port 103. The water discharged through the tub port 103 may be guided to the tub 20 through the tub guide 63.

Another part of the water in the space between the case cover 105 and the case guide 107 may be discharged to the filter installing portion 116 through the washing hole 109. The water discharged to the filter installing portion 116 may be discharged toward the filter 120. The water discharged through the washing hole 109 may be discharged toward the outer side of the filter 120. The water discharged through the washing hole 109 may be discharged to an opposite side of the filter side 122a of the filter 120. Because water is supplied to the side of the filter 120 being opposite to the filter side 122a where foreign materials are collected, foreign materials collected on the filter side 122a may be separated from the filter side 122a. Foreign materials collected on the filter side 122a of the filter portion 122, positioned at an upper side of the filter 120 facing the washing hole 109, may move to a lower portion of the filter 120. At least a part of foreign materials collected on the filter side 122a of the filter portion 122, positioned at front, rear, left, or right sides of the filter 120 may move to the lower portion of the filter 120.

The water washed the filter 120 may move to the space between the drawer body 111 and the case body 101 through the drawer outlet 114. The water moved to the space between the drawer body 111 and the case body 101 may be discharged through the tub port 103. The water discharged through the tub port 103 may be discharged to the tub 20 through the tub guide 63.

According to this configuration, the washing machine 1 according to various embodiments may wash the filter 120 with water supplied through the water supply device 60, thereby extending a life span of the filter 120 and increasing a replacement cycle of the filter 120.

FIG. 8 is a control block diagram of a washing machine according to an embodiment.

Referring to FIG. 8, the washing machine 1 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The driver 50 may rotate the drum 30. The driver 50 may include diving circuitry for supplying driving current to the driving motor 51, and the driving circuitry may supply driving current to the driving motor 51 in response to a driving signal from the controller 90.

In an embodiment, the driver 50 may include rectifier circuitry for rectifying alternating current power from an external power source, direct current link circuitry for removing ripples of the rectified power and outputting direct current power, inverter circuitry for converting the direct current power into sinusoidal driving power and outputting driving current to the driving motor 51, a current sensor for measuring the driving current that is supplied to the driving motor 51, and a gate driver for turning on/off a switching device included in the inverter circuitry based on a driving signal from the controller 90.

The water supply device 60 may provide water supplied from an external power source to the tub 20 based on a control signal from the controller 90.

The water supply device 60 according to an embodiment may include the water supply valve 62 provided in the water supply guide 61 to supply water to the water supply port 106.

According to various embodiments, the water supply valve 62 may be an electronic valve of which an opening rate is adjusted, or an on-off valve of which an opening rate is not adjusted.

Water supplied by the water supply device 60 according to an embodiment may flow into the detergent supply device 100 through the water supply port 106, a part of water in the space between the case cover 105 and the case guide 107 may be discharged to the detergent accommodating portion 113 through the water supply hole 108, and another part of the water in the space between the case cover 105 and the case guide 107 may be discharged to the filter installing portion 116 through the washing hole 109.

The pump device 70 may include the circulation pump 71 and the drain pump 72. Water pumped by the circulation pump 71 of the pump device 70 may flow into the tub 20 via the detergent supply device 100.

Water pumped by the drain pump 72 of the pump device 70 of the washing machine 1 according to an embodiment may be discharged to the outside without passing through the detergent supply device 100.

The pump device 70 may be driven by a driving signal from the controller 90.

The controller 90 may include at least one memory 92 and at least one processor 91 for performing the above-described operations and operations which will be described below.

According to an embodiment, the controller 90 may include at least one memory 92 that stores data in the form of an algorithm and/or program for controlling operations of components in the washing machine 1, and at least one processor 91 that performs the above-described operations and operations which will be described below by using the data stored in the at least one memory 92. The memory 92 and the processor 91 may be implemented with separate chips. The processor 91 may include one, two, or more processor chips or one, two, or more processing cores. The memory 92 may include one, two, or more memory chips or one, two, or more memory blocks. Also, the memory 92 and the processor 91 may be implemented with a single chip.

The controller 90 may process a user input received through the input device 14a, and control various components (for example, the driver 50, the water supply device 60, the display 14b, and the pump device 70) of the washing machine 1 based on the processed result of the user input.

The controller 90 may perform a washing operation, a rinsing operation, and a dehydrating operation, sequentially, according to a user input received through the input device 14a.

To supply water, the controller 90 may control the water supply device 60 to provide water supplied from an external power source to the tub 20.

The controller 90 may open the water supply valve 62 to supply water. The controller 90 may close the water supply valve 62 based on satisfaction of a water supply termination condition.

According to the water supply valve 62 being implemented as an electronic valve of which an opening rate is adjusted, the controller 90 may fully open the electronic valve to supply water.

Water supplied to the detergent supply device 100 through the water supply port 106 during water supply may flow into the water supply hole 108 and the washing hole 109.

According to the disclosure, because water flows into the washing hole 109 during water supply, the filter 120 may be washed.

The controller 90 may perform a circulation operation during a washing operation and/or a rinsing operation.

For the circulation operation, the controller 90 may drive the circulation pump 71 of the pump device 70. During the circulation operation, water pumped by the circulation pump 71 of the pump device 70 may flow into the tub 20 via the detergent supply device 100. According to a circulation operation in which water from which foreign materials have been removed flows into the tub 20, more efficient washing may be performed.

Meanwhile, in the washing machine 1 according to an embodiment, foreign materials may be collected in the filter 120 during a circulation operation.

The washing machine 1 according to an embodiment may drive the water supply device 60 for a preset time during a drain operation.

For example, the controller 90 according to an embodiment may open the water supply valve 62 for the preset time during the drain operation.

According to the water supply valve 62 being implemented as an electronic valve of which an opening rate is adjusted, the controller 90 may partially open the electronic valve for the preset time during a drain operation. That is, the controller 90 may open the water supply valve 62 by a first opening rate during a water supply operation, and open the water supply valve 62 by a second opening rate for the preset time during a drain operation, wherein the first opening rate may be greater than the second opening rate.

According to an embodiment, by opening the water supply valve 62 during a drain operation, foreign materials collected on the filter side 122a during a circulation operation may be removed.

Also, according to an embodiment, by partially opening the water supply valve 62 during a drain operation, an amount of water flowing into the tub 20 may be reduced.

According to an embodiment, the washing machine 1 may receive a user input for cleaning the filter 120.

The user input for cleaning the filter 120 may be received through the input device 14a of the control panel 14, or from an external device (for example, a user terminal) through a communication module of the washing machine 1.

The controller 90 of the washing machine 1 according to an embodiment may open the water supply valve 62 for a preset time based on reception of a user input for cleaning the filter 120. At this time, the water supply valve 62 may partially open.

According to the disclosure, by performing an operation of cleaning the filter 120 according to a user's intention, the user's convenience may be improved.

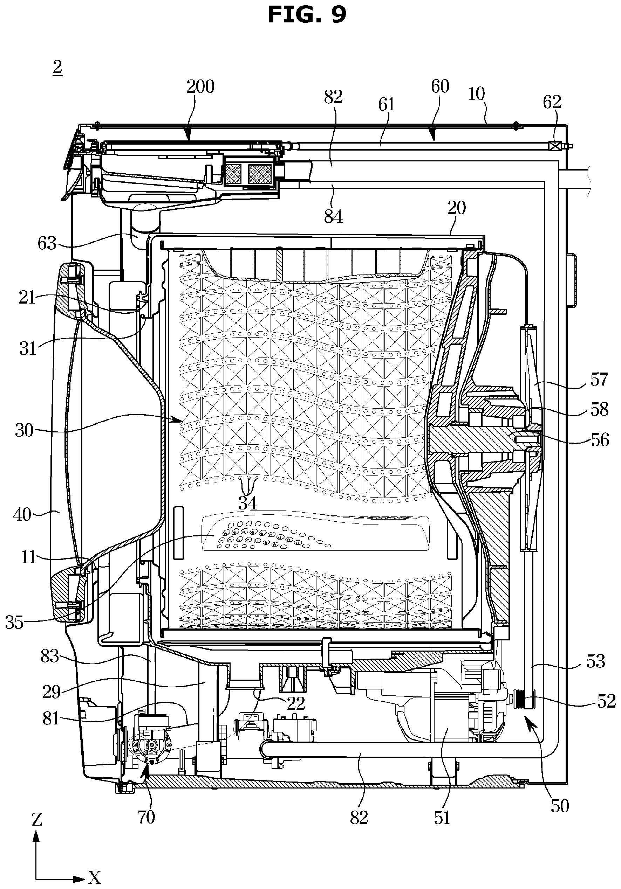

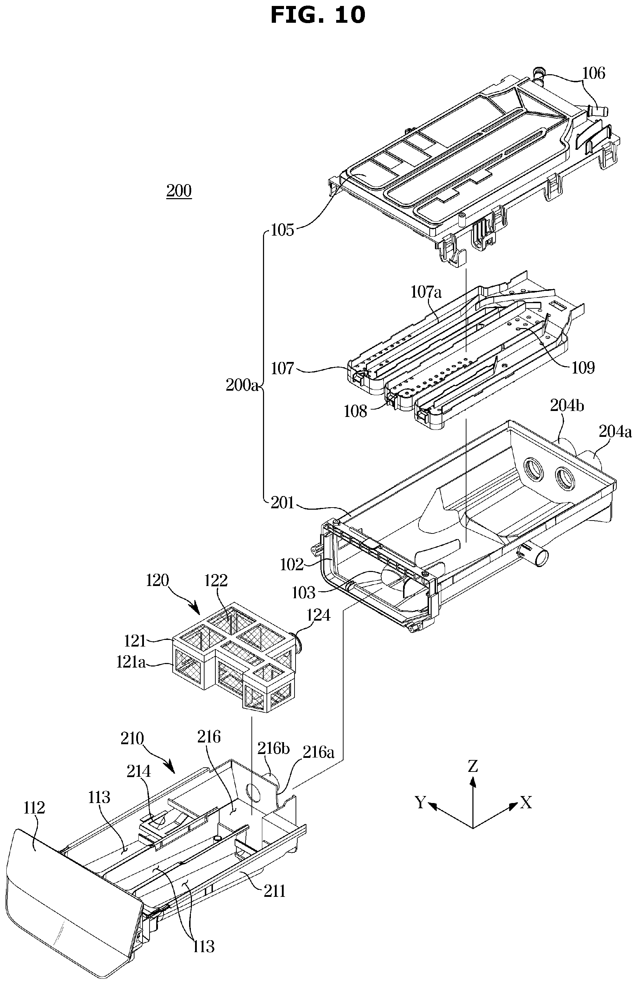

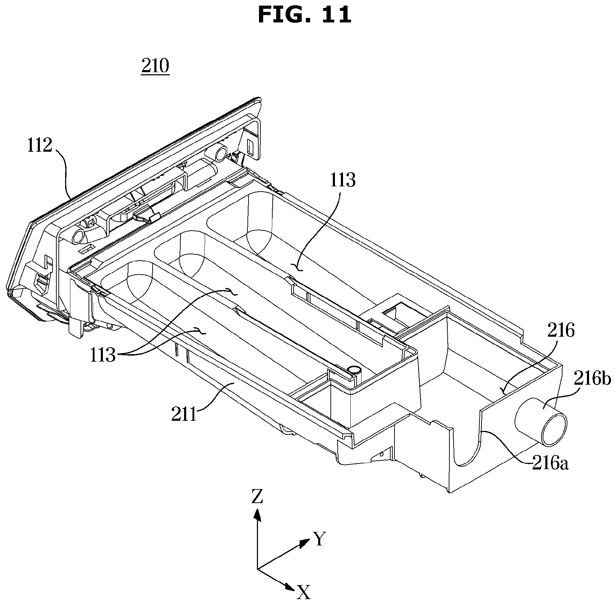

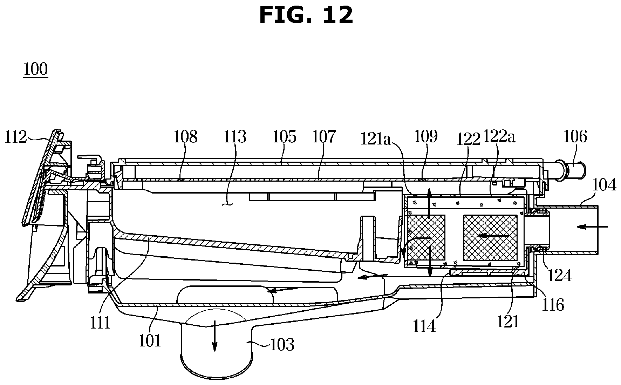

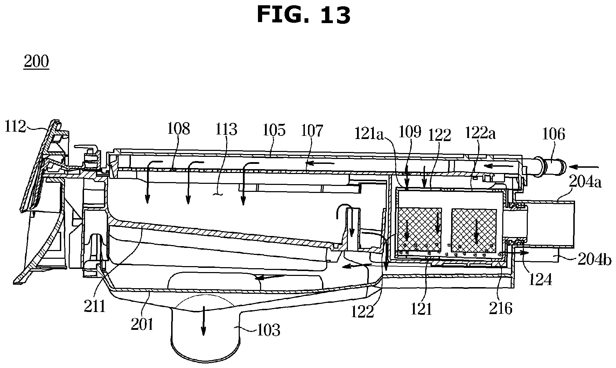

FIG. 9 shows a cross section of a washing machine according to an embodiment. FIG. 10 is an exploded view of a detergent supply device shown in FIG. 9. FIG. 11 shows a drawer shown in FIG. 9. FIG. 12 shows a flow of water that is filtered by passing through a filter, in a cross section of the detergent supply device shown in FIG. 10. FIG. 13 shows a flow of water that washes the filter, in the cross section of the detergent supply device shown in FIG. 10.

A washing machine 2 according to an embodiment will be described with reference to FIGS. 9 to 13. In the following description about the washing machine 2 shown in FIGS. 9 to 13, the same components as those of the washing machine 1 shown in FIGS. 1 to 9 are assigned like reference numerals and detailed descriptions thereof will be omitted.

Referring to FIGS. 9 to 11, the washing machine 2 may include a detergent supply device 200 configured to receive water through the water supply device 60. The detergent supply device 200 may be connected to the pump device 70 through the drain guide 82. The detergent supply device 200 may be connected to an external guide 84 to discharge water stored in the detergent supply device 200 to outside of the washing machine 2.

The detergent supply device 200 may include a drawer case 200a configured with a case body 201, the case cover 105, and the case guide 107. The case body 201 may include a case inlet 204a and a case outlet 204b.

The case inlet 204a may be connected to the drain guide 82. Water guided along the drain guide 82 may flow into the drawer case 200a through the case inlet 204a. The case inlet 204a may be connected to the filter inlet 124. The water flowed into the drawer case 200a through the case inlet 204a may flow into the inside of the filter 120 through the filter inlet 124.

The case outlet 204b may be connected to the external guide 84. Water in the drawer case 200a may be discharged to the external guide 84 through the case outlet 204b. The case outlet 204b may communicate with a filter installing portion 216. Water in the filter installing portion 216 may be discharged to outside of the drawer case 200a through the case outlet 204b.

The detergent supply device 200 may include a drawer 210 that is accommodated in the drawer case 200a. The drawer 210 may include a drawer outlet 214 for discharging water and/or a detergent in the detergent accommodating portion 113 to a space between the drawer body 211 and the case body 201. The drawer outlet 114 shown in FIG. 4 may communicate with the filter installing portion 116, whereas the drawer outlet 214 shown in FIG. 10 may not communicate with the filter installing portion 216. The drawer outlet 214 may be partitioned from the filter installing portion 216.

The drawer 210 may include the filter installing portion 216 formed to install the filter 120 therein. The filter installing portion 216 may be separated from the drawer outlet 214. The filter installing portion 216 may be formed to prevent water in the filter installing portion 216 from being discharged to the space between the drawer body 211 and the case body 201.

The filter installing portion 216 may include a filter inlet accommodating portion 216a in which the filter inlet 124 of the filter 120 is accommodated. The filter inlet accommodating portion 216a may be positioned to correspond to the case inlet 204a.

The filter installing portion 216 may include a drain port 216b connected to the case outlet 204b. The drain port 216b may connect the filter installing portion 216 to the case outlet 204b. Water in the filter installing portion 216 may be discharged to the outside of the drawer case 200a through the case outlet 204b via the drain port 216b, without passing through the space between the drawer body 211 and the case body 201.

Referring to FIGS. 9 and 12, the washing machine 2 according to various embodiments may filter out, while discharging water in the tub 20 to the outside of the washing machine 2, foreign materials from water that is discharged.

Water that is discharged from the pump device 70 toward the tub 20 may be guided along the drain guide 82. The water guided along the drain guide 82 may flow into the detergent supply device 200 through the case inlet 204a. The water flowed through the case inlet 204a may flow into the inside space of the filter 120 through the filter inlet 124 connected to the case inlet 204a. While the water flowed into the inside space of the filter 120 moves to the outside of the filter 120 through the filter portion 122, foreign materials may be filtered out from the water.

The filter portion 122 may include the filter side 122a that faces the inside of the filter 120. While water passed through the filter inlet 124 moves from the inside of the filter 120 to the outside, foreign materials may be filtered out from the water, and the foreign materials filtered out by passing through the filter portion 122 may be collected on the filter side 122a of the filter portion 122.

The water which has passed through the filter 120 and from which foreign materials have been filtered out may move to a space between the filter installing portion 216 and the filter 120. The water moved to the space between the filter installing portion 216 and the filter 120 may pass through the drain port 216b and the case outlet 204b sequentially and then be discharged from the detergent supply device 200. The water discharged through the case outlet 204b may be discharged to the outside of the washing machine 2 through the external guide 84.

According to this configuration, because the washing machine 2 according to various embodiments is capable of filtering out foreign materials from water discharged from the tub 20, an amount of foreign materials that are discharged from the washing machine 2, particularly, an amount of foreign materials having fine sizes may be reduced.

Referring to FIGS. 9 and 13, the washing machine 2 according to various embodiments may wash the filter 120 while water is supplied to the detergent supply device 200 by the water supply device 60.

Water supplied by the water supply device 60 may flow into the detergent supply device 200 through the water supply port 106. The water flowed into the detergent supply device 200 may be guided by the guide rib 107a in the space between the case cover 105 and the case guide 107.

A part of the water in the space between the case cover 105 and the case guide 107 may be discharged to the detergent accommodating portion 113 through the water supply hole 108. The water discharged to the detergent supply device 200 may be discharged, together with a detergent in the detergent accommodating portion 113, to the space between the drawer body 211 and the case body 201 through the drawer outlet 214. The water discharged to the space between the drawer body 211 and the case body 201 may be discharged through the tub port 103. The water discharged through the tub port 103 may be guided to the tub 20 through the tub guide 63.

Another part of the water in the space between the case cover 105 and the case guide 107 may be discharged to the filter installing portion 216 through the washing hole 109. The water discharged to the filter installing portion 216 may be discharged toward the filter 120. The water discharged through the washing hole 109 may be discharged toward the outer side of the filter 120. The water discharged through the washing hole 109 may be discharged to the opposite side of the filter side 122a of the filter 120. Because water is supplied to the side of the filter 120 being opposite to the filter side 122a where foreign materials are collected, foreign materials collected on the filter side 122a may be separated from the filter side 122a. Foreign materials collected on the filter side 122a of the filter portion 122, positioned at the upper side of the filter 120 facing the washing hole 109, may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the filter installing portion 216 and the filter 120. The water moved to the space between the filter installing portion 216 and the filter 120 may pass through the drain port 216b and the case outlet 204b sequentially and then be discharged from the detergent supply device 200. The water discharged through the case outlet 204b may be discharged to the outside of the washing machine 2 through the external guide 84.

According to this configuration, the washing machine 2 according to various embodiments may wash the filter 120 with water supplied through the water supply device 60, thereby extending a life span of the filter 120 and increasing a replacement cycle of the filter 120.

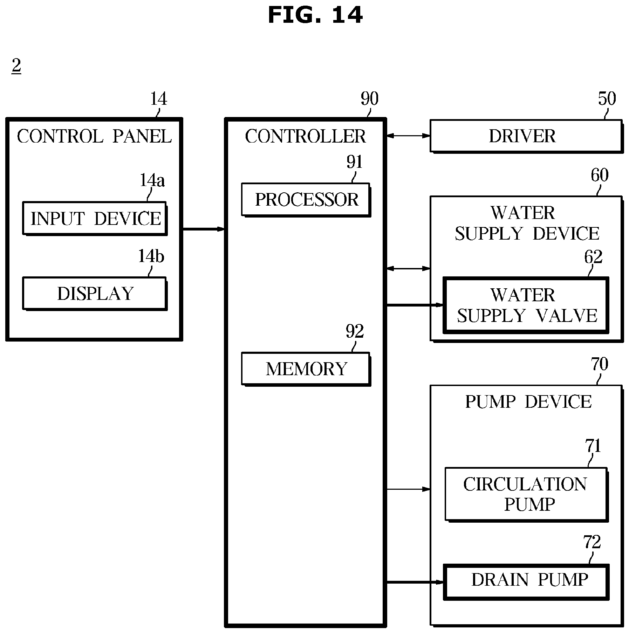

FIG. 14 is a control block diagram of a washing machine according to an embodiment.

Components of the washing machine 2 according to an embodiment will be described with reference to FIG. 14, and descriptions about the same components as those of the washing machine 1 according to an embodiment will be omitted.

The washing machine 2 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The controller 90 may open the water supply valve 62 to supply water. The controller 90 may close the water supply valve 62 based on satisfaction of a water supply termination condition.

According to the water supply valve 62 being implemented as an electronic valve of which an opening rate is adjusted, the controller 90 may fully open the electronic valve to supply water.

Water supplied to the detergent supply device 200 through the water supply port 106 during water supply may flow into the water supply hole 108 and the washing hole 109.

According to the disclosure, because water flows into the washing hole 109 during water supply, the filter 120 may be washed.

To drain water, the controller 90 may drive the drain pump 72 of the pump device 70. During drainage, water pumped by the drain pump 72 of the pump device 70 according to an embodiment may be discharged to the outside via the detergent supply device 200. According to a drain operation in which water from which foreign materials have been removed is discharged to the outside of the tub 20, environmental pollution may be further prevented.

**In** the washing machine 2 according to an embodiment, because water flows into the filter 120 during a drain operation, foreign materials may flow to the filter side 122a.

While a water level of the tub 20 is high, a large amount of water may flow into the filter 120, and accordingly, even though the water supply valve 62 is opened, it may be difficult to efficiently remove foreign materials collected on the filter side 122a.

However, while a water level of the tub 20 is low, a small amount of water may flow into the filter 120, and the water may not reach the filter side 122a. Accordingly, by opening the water supply valve 62, foreign materials collected on the filter side 122a can be efficiently removed.

The controller 90 according to an embodiment may wash the filter side 122a by opening the water supply valve 62 in the state in which an amount of water flowed into the filter 120 of the tub 20 is small during a drain operation.

According to an embodiment, based on a water level of the tub 20 being lower than a preset water level (for example, a reset water level) during a drain operation, the controller 90 may open the water supply valve 62 for the preset time. To this end, the washing machine 2 may further include a water level sensor (not shown).

As another example, based on a load of the pump device 70 being smaller than a preset value during a drain operation, the controller 90 may open the water supply valve 62 for the preset time.

As another example, based on elapse of a predefined time from a start time of a drain operation, the controller 90 may open the water supply valve 62 for the preset time.

According to the disclosure, foreign materials collected on the filter side 122a may be efficiently removed during a drain operation.

According to an embodiment, the washing machine 2 may receive a user input for cleaning the filter 120.

The user input for cleaning the filter 120 may be received through the input device 14a of the control panel 14, or from an external device (for example, a user terminal) through the communication module of the washing machine 2.

Based on reception of a user input for cleaning the filter 120, the controller 90 of the washing machine 2 according to an embodiment may open the water supply valve 62 for a preset time. At this time, the water supply valve 62 may partially open.

According to an embodiment, by performing an operation of cleaning the filter 120 according to a user's intention, the user's convenience may be improved.

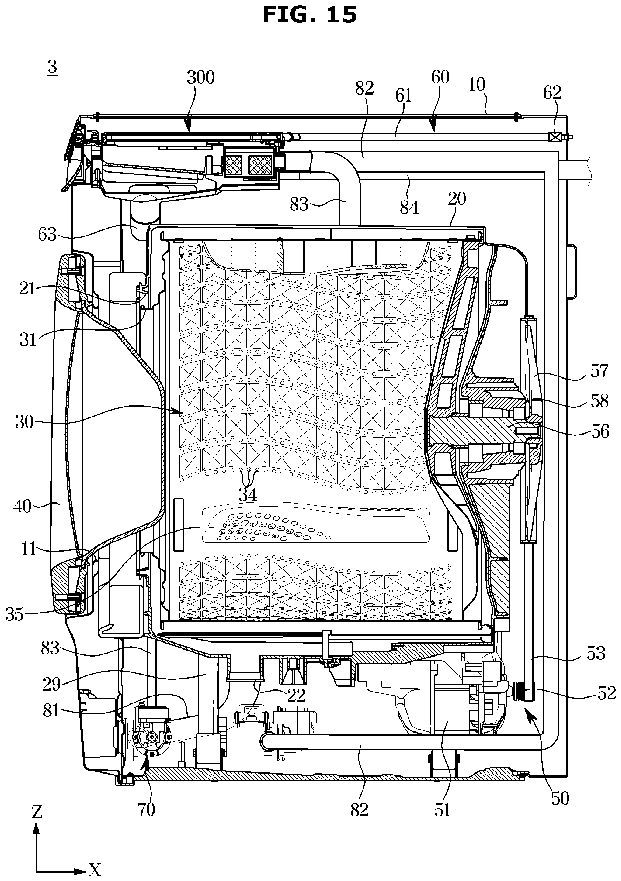

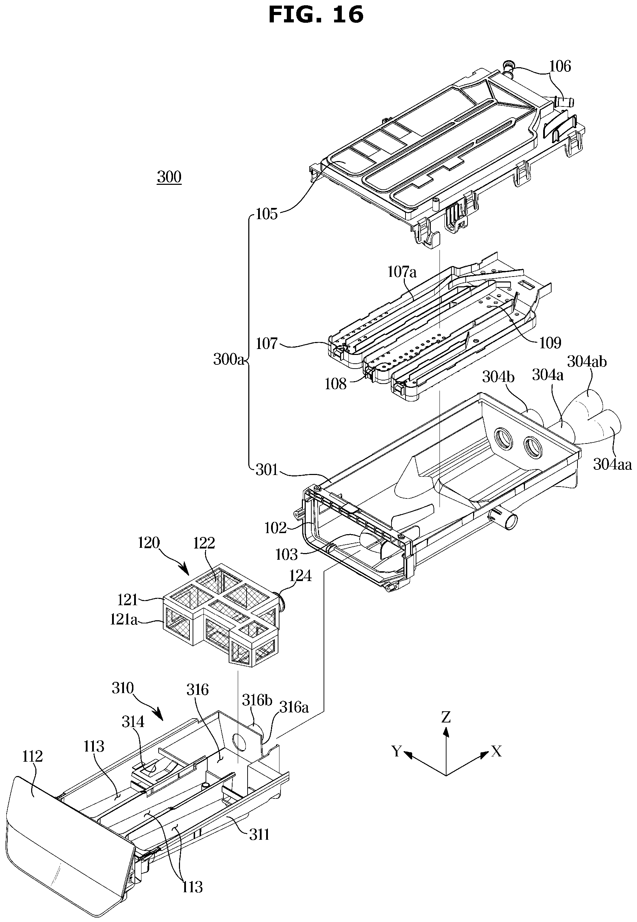

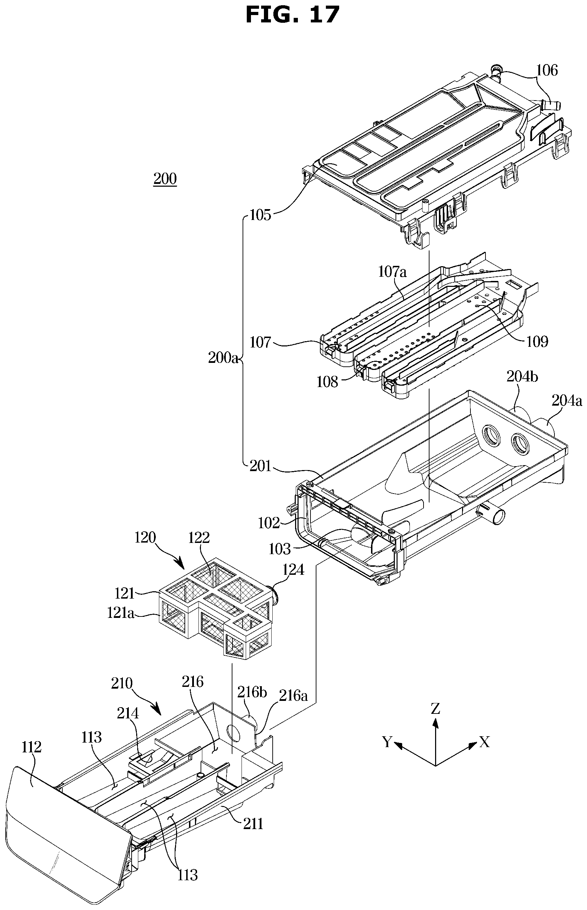

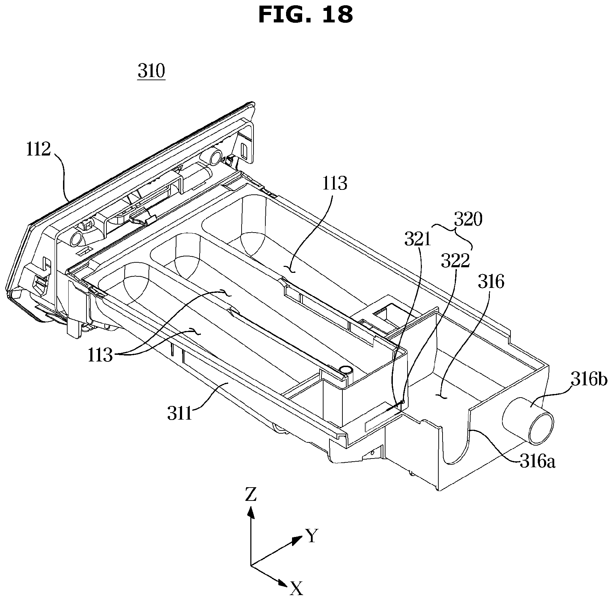

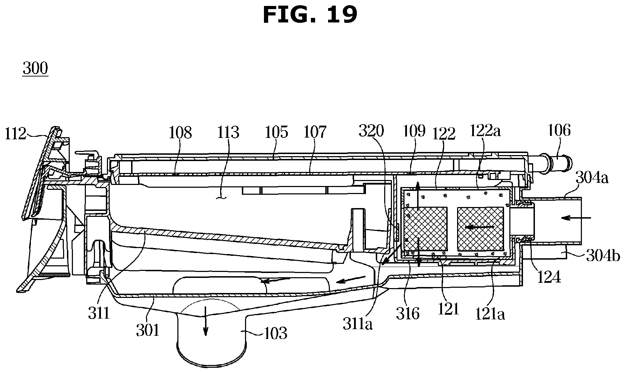

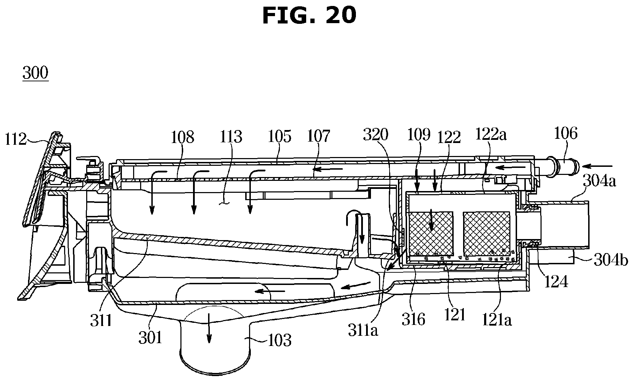

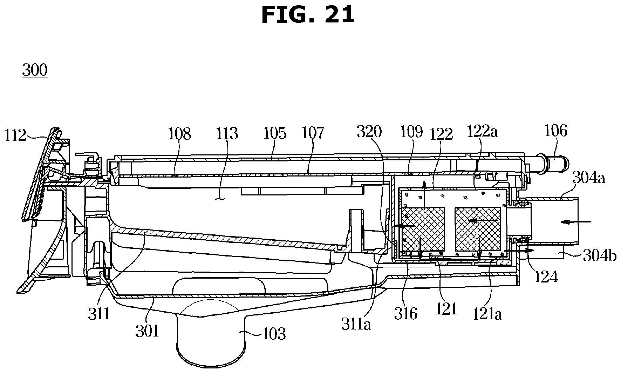

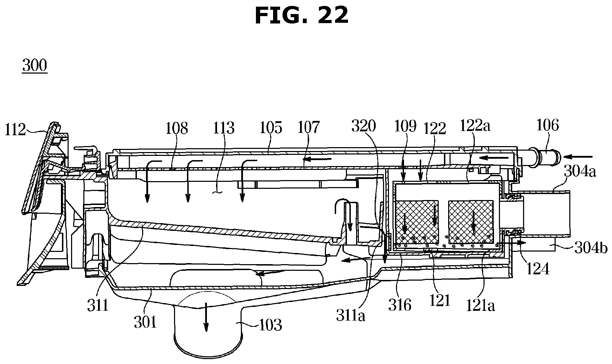

FIG. 15 shows a cross section of a washing machine according to an embodiment. FIG. 16 is an exploded view of a detergent supply device shown in FIG. 15. FIG. 17 shows a drawer shown in FIG. 14. FIG. 18 shows a state in which a circulation door of the drawer shown in FIG. 17 closes a circulation opening. FIG. 19 shows a flow of water that flows into a pump device and then is discharged to a tub, in a cross section of the detergent supply device shown in FIG. 16. FIG. 20 shows a flow of water that washes a filter and then is discharged to the tub, in the cross section of the detergent supply device shown in FIG. 16. FIG. 21 shows a flow of water that is supplied from the pump device and then discharged to outside of the washing machine, in the cross section of the detergent supply device shown in FIG. 16. FIG. 22 shows a flow of water that washes the filter and then is discharged to the outside of the washing machine, in the cross section of the detergent supply device shown in FIG. 16.

A washing machine 3 according to an embodiment will be described with reference to FIGS. 15 to 22. In the following description about the washing machine 3 shown in FIGS. 15 to 22, the same components as those of the washing machine 2 shown in FIGS. 9 to 13 are assigned like reference numerals and detailed descriptions thereof will be omitted.

Referring to FIGS. 15 to 18, the washing machine 3 may include a detergent supply device 300 configured to receive water through the water supply device 60. The detergent supply device 300 may be connected to the pump device 70 through the drain guide 82 and the circulation guide 83. The detergent supply device 300 may be connected to the tub guide 63 to discharge water in the detergent supply device 300 to the tub 20. The detergent supply device 300 may be connected to the external guide 84 and discharge water in the detergent supply device 300 to outside of the washing machine 3.

The detergent supply device 300 may include a drawer case 300a configured with a case body 301, the case cover 105, and the case guide 107. The case body 301 may include a case inlet 304a and a case outlet 304b. The case inlet 304a may include a circulation case inlet 304aa and a drain case inlet 304ab.

The circulation case inlet 304aa may be connected to the circulation guide 83. Water guided along the circulation guide 83 may flow into the drawer case 300a through the circulation case inlet 304aa.

The drain case inlet 304ab may be connected to the drain guide 82. Water guided along the drain guide 82 may flow into the drawer case 300a through the drain case inlet 304ab.

The case inlet 304a may be connected to the filter inlet 124. Water flowed into the drawer case 300a through the case inlet 304a may flow into the filter 120 through the filter inlet 124.

The case outlet 304b may be connected to the external guide 84. Water in the drawer case 300a may be discharged to the external guide 84 through the case outlet 304b. The case outlet 304b may communicate with a filter installing portion 316. Water in the filter installing portion 216 may be discharged to outside of the drawer case 300a through the case outlet 340b.

The detergent supply device 300 may include a drawer 310 that is accommodated in the drawer case 300a. The drawer 310 may include a drawer outlet 314 for discharging water and/or a detergent in the detergent accommodating portion 113 to a space between a drawer body 311 and the case body 301. The drawer outlet 314 shown in FIG. 16 may selectively communicate with the filter installing portion 316.

The drawer 310 may include the filter installing portion 316 formed to install the filter 120 therein. The filter installing portion 316 may be selectively partitioned from the drawer outlet 314. The filter installing portion 316 may be formed to selectively discharge water in the filter installing portion 316 to the space between the drawer body 311 and the case body 301.

The filter installing portion 316 may include a filter inlet accommodating portion 316a in which the filter inlet 124 of the filter 120 is accommodated. The filter inlet accommodating portion 316a may be positioned to correspond to the case inlet 304a.

The filter installing portion 316 may include a drain port 316b connected to the case outlet 304b. The drain port 316b may connect the filter installing portion 316 to the case outlet 304b. Water in the filter installing portion 316 may be discharged to the outside of the drawer case 300a through the case outlet 304b via the drain port 316b without passing through the space between the drawer body 311 and the case body 301.

Referring to FIGS. 17 and 18, the drawer body 311 may include a drawer hole 311a for communicating the filter installing portion 316 with the space between the drawer body 311 and the case body 301. The drawer hole 311a may be opened or closed by a hole opening/closing device 320.

The detergent supply device 300 may include the hole opening/closing device 320 for opening or closing the drawer hole 311a. The hole opening/closing device 320 may include a hole door 321, and a door driver 322 for operating the hole door 321. According to the hole opening/closing device 320 opening/closing the drawer hole 311a, the filter installing portion 316 may selectively communicate with the space between the drawer body 311 and the case body 301.

Referring to FIGS. 15 and 19, the washing machine 3 according to various embodiments may filter out, while circulating water in the tub 20, foreign materials from the circulating water. While water in the tub 20 circulates, the hole opening/closing device 320 may open the drawer hole 311a.

Water discharged from the pump device 70 toward the tub 20 may be guided along the circulation guide 83. The water guided along the circulation guide 83 may flow into the detergent supply device 300 through the circulation case inlet 304aa of the case inlet 304a. The water flowed through the circulation case inlet 304aa of the case inlet 304a may flow into the inside space of the filter 120 through the filter inlet 124 connected to the case inlet 304a. While the water flowed into the inside space of the filter 120 moves to the outside of the filter 120 through the filter portion 122, foreign materials may be filtered out from the water.

The filter portion 122 may include the filter side 122a that faces the inside of the filter 120. While water flowed through the filter inlet 124 moves from the inside of the filter 120 to the outside, foreign materials may be filtered out from the water, and the foreign materials filtered out by passing through the filter portion 122 may be collected on the filter side 122a of the filter portion 122.

The water which has passed through the filter 120 and from which foreign materials have been filtered out may move to the space between the drawer body 311 and the case body 301 from the filter installing portion 316 through the drawer hole 311a. The water discharged to the space between the drawer body 311 and the case body 301 may be discharged through the tub port 103. The water discharged through the tub port 103 may be guided to the tub 20 through the tub guide 63.

According to this configuration, because the washing machine 3 according to various embodiments filters out foreign materials from water circulating through the tub 20, an amount of foreign materials that are discharged from the washing machine 3, particularly, an amount of foreign materials having fine sizes may be reduced.

Referring to FIGS. 15 and 20, the washing machine 3 according to various embodiments may wash the filter 120 while water is supplied to the detergent supply device 300 by the water supply device 60, and discharge water washed the filter 120 to the tub 20. The hole opening/closing device 320 may open the drawer hole 311a.

Water supplied by the water supply device 60 may flow into the detergent supply device 300 through the water supply port 106. The water flowed into the detergent supply device 300 may be guided by the guide rib 107a in the space between the case cover 105 and the case guide 107.

A part of the water in the space between the case cover 105 and the case guide 107 may be discharged to the detergent accommodating portion 113 through the water supply hole 108. The water discharged to the detergent accommodating portion 113 may be discharged, together with a detergent in the detergent accommodating portion 113, to the space between the drawer body 311 and the case body 301 through the drawer outlet 314. The water discharged to the space between the drawer body 311 and the case body 301 may be discharged through the tub port 103. The water discharged through the tub port 103 may be guided to the tub 20 through the tub guide 63.

Another part of the water in the space between the case cover 105 and the case guide 107 may be discharged to the filter installing portion 316 through the washing hole 109. The water discharged to the filter installing portion 316 may be discharged toward the filter 120. The water discharged through the washing hole 109 may be discharged toward the outer side of the filter 120. The water discharged through the washing hole 109 may be discharged to the opposite side of the filter side 122a of the filter 120. Because water is supplied to the side of the filter 120 being opposite to the filter side 122a where foreign materials are collected, foreign materials collected on the filter side 122a may be separated from the filter side 122a. Foreign materials collected on the filter side 122a of the filter portion 122, positioned at the upper side of the filter 120 facing the washing hole 109, may move to the lower portion of the filter 120. At least a part of foreign materials collected on the filter side 122a of the filter portion 122, positioned at the front, rear, left, or right sides of the filter 120, may move to the lower portion of the filter 120.

The water washed the filter 120 may move to the space between the drawer body 311 and the case body 301 from the filter installing portion 316 through the drawer hole 311a. The water discharged to the space between the drawer body 311 and the case bod 301 may be discharged through the tub port 103. The water discharged through the tub port 103 may be guided to the tub 20 through the tub guide 63.

According to this configuration, the washing machine 3 according to various embodiments may wash the filter 120 with water supplied through the water supply device 60, thereby extending a life span of the filter 120 and increasing a replacement cycle of the filter 120.

Referring to FIGS. 15 and 21, while water in the tub 20 is discharged to the outside of the washing machine 3, the washing machine 3 according to various embodiments may filter foreign materials out from the water that is discharged. While water in tub 20 is discharged to the outside of the washing machine 3, the hole opening/closing device 320 may close the drawer hole 311a.

Water discharged from the pump device 70 toward the tub 20 may be guided along the drain guide 82. The water guided along the drain guide 82 may flow into the detergent supply device 300 through the drain case inlet 304ab of the case inlet 304a. The water flowed through the drain case inlet 304ab of the case inlet 304a may flow into the inside space of the filter 120 through the filter inlet 124 connected to the case inlet 304a. While the water flowed into the inside space of the filter 120 moves to the outside of the filter 120 through the filter portion 122, foreign materials may be filtered out from the water.

The filter portion 122 may include the filter side 122a that faces the inside of the filter 120. While water flowed through the filter inlet 124 moves from the inside of the filter 120 to the outside, foreign materials may be filtered out from the water, and the foreign materials filtered out by passing through the filter portion 122 may be collected on the filter side 122a of the filter portion 122.

The water which has passed through the filter 120 and from which foreign materials have been filtered out may be discharged to the space between the filter installing portion 316 and the filter 120. The water moved to the space between the filter installing portion 316 and the filter 120 may pass the drain port 316b and the case outlet 304b sequentially and then be discharged from the detergent supply device 300. The water discharged through the case outlet 304b may be discharged to the outside of the washing machine 3 through the external guide 84.

According to this configuration, because the washing machine 3 according to various embodiments filters out foreign materials from water that is discharged from the tub 20, an amount of foreign materials that are discharged from the washing machine 3, particularly, an amount of foreign materials having fine sizes, may be reduced.

Referring to FIGS. 15 and 22, the washing machine 3 according to various embodiments may wash the filter 120 while water is supplied to the detergent supply device 300 by the water supply device 60, and discharge water washed the filter 120 to the outside of the washing machine 3. The hole opening/closing device 320 may close the drawer hole 311a.

Water supplied by the water supply device 60 may flow into the detergent supply device 300 through the water supply port 106. The water flowed into the detergent supply device 300 may be guided by the guide rib 107a in the space between the case cover 105 and the case guide 107.

A part of the water in the space between the case cover 105 and the case guide 107 may be discharged to the detergent accommodating portion 113 through the water supply hole 108. The water discharged to the detergent accommodating portion 113 may be discharged, together with a detergent in the detergent accommodating portion 113, to the space between the drawer body 311 and the case body 301 through the drawer outlet 314. The water discharged to the space between the drawer body 311 and the case body 301 may be discharged through the tub port 103. The water discharged through the tub port 103 may be guided to the tub 20 through the tub guide 63.

Another part of the water in the space between the case cover 105 and the case guide 107 may be discharged to the filter installing portion 316 through the washing hole 109. The water discharged to the filter installing portion 316 may be discharged toward the filter 120. The water discharged through the washing hole 109 may be discharged toward the outer side of the filter 120. The water discharged through the washing hole 109 may be discharged to the opposite side of the filter side 122a of the filter 120. Because water is supplied to the side of the filter 120 being opposite to the filter side 122a where foreign materials are collected, foreign materials collected on the filter side 122a may be separated from the filter side 122a. Foreign materials collected on the filter side 122a of the filter portion 122, positioned at the upper side of the filter 120 facing the washing hole 109, may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the filter installing portion 316 and the filter 120. The water moved to the space between the filter installing portion 316 and the filter 120 may pass through the drain port 316b and the case outlet 304b sequentially and then be discharged from the detergent supply device 300. The water discharged through the case outlet 304b may be discharged to the outside of the washing machine 3 through the external guide 84.

According to this configuration, the washing machine 3 according to various embodiments may wash the filter 120 with water supplied through the water supply device 60, thereby extending a life span of the filter 120 and increasing a replacement cycle of the filter 120.

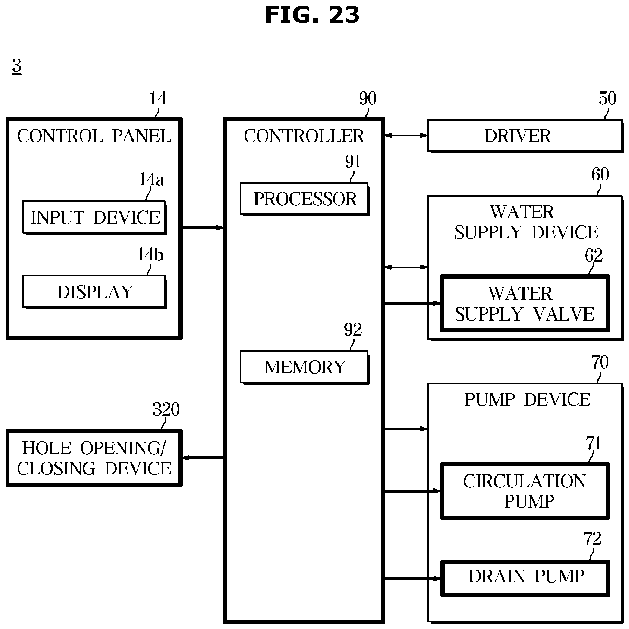

FIG. 23 is a control block diagram of a washing machine according to an embodiment.

Components of the washing machine 3 according to an embodiment will be described with reference to FIG. 23, and descriptions about the same components as those of the washing machine 1 or 2 according to an embodiment will be omitted.

Referring to FIG. 23, the washing machine 3 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The washing machine 3 according to an embodiment may further include the hole opening/closing device 320.

The hole opening/closing device 320 may include the hole door 321, and the door driver 322 for operating the hole door 321. According to the hole opening/closing device 320 opening/closing the drawer hole 311a, the filter installing portion 316 may selectively communicate with the space between the drawer body 311 and the case body 301.

The controller 90 may process a user input received through the input device 14a, and control various components (for example, the driver 50, the water supply device 60, the display 14b, the pump device 70 and/or the hole opening/closing device 320) of the washing machine 3 based on the processed result of the user input.

The controller 90 may drive the circulation pump 71 of the pump device 70 for a circulation operation. During the circulation operation, water pumped by the circulation pump 71 of the pump device 70 of the washing machine 3 according to an embodiment may flow into the tub 20 via the detergent supply device 300. According to a circulation operation in which water from which foreign materials have been removed flows into the tub 20, more efficient washing may be performed.

To drain water, the controller 90 may drive the drain pump 72 of the pump device 70. During drainage, water pumped by the drain pump 72 of the pump device 70 of the washing machine 3 according to an embodiment may be to the outside via the detergent supply device 300. According to a drain operation in which water from which foreign materials have been removed is discharged to the outside of the tub 20, environmental pollution may be further prevented.

**In** the washing machine 3 according to an embodiment, foreign materials may be collected in the filter 120 during a drain operation and a circulation operation.

The washing machine 3 according to an embodiment may drive the water supply device 60 for a preset time during a drain operation.

For example, the controller 90 according to an embodiment may open the water supply valve 62 for the preset time during a drain operation.

According to the water supply valve 62 being implemented as an electronic valve of which an opening rate is adjusted, the controller 90 may partially open the electronic valve for the preset time during a drain operation. That is, the controller 90 may open the water supply valve 62 by a first opening rate during a water supply operation, and open the water supply valve 62 by a second opening rate for the preset time during a drain operation, wherein the first opening rate may be greater than the second opening rate.

According to the disclosure, by opening the water supply valve 62 during a drain operation, foreign materials collected on the filter side 122a during a circulation operation may be removed.

Also, according to the disclosure, by partially opening the water supply valve 62 during a drain operation, an amount of water that flows into the tub 20 may be reduced.

While a water level of the tub 20 is high, a large amount of water may flow into the filter 120, and accordingly, even though the water supply valve 62 is opened, it may be difficult to efficiently remove foreign materials collected on the filter side 122a.

However, while a water level of the tub 20 is low, a small amount of water may flow into the filter 120, and the water may not reach the filter side 122a. Accordingly, by opening the water supply valve 62, foreign materials collected on the filter side 122a can be efficiently removed.

The controller 90 may wash the filter side 122a by opening the water supply valve 62 in the state in which an amount of water flowed into the filter 120 of the tub 20 is small during a drain operation.

According to an embodiment, based on a water level of the tub 20 being lower than a preset water level (for example, a reset water level) during a drain operation, the controller 90 may open the water supply valve 62 for the preset time. To this end, the washing machine 3 may further include a water level sensor (not shown).

As another example, based on a load of the pump device 70 being smaller than a preset value during a drain operation, the controller 90 may open the water supply valve 62 for the preset time.

As another example, based on elapse of a predefined time from a start time of a drain operation, the controller 90 may open the water supply valve 62 for the preset time.

According to an embodiment, foreign materials collected on the filter side 122a may be efficiently removed during a drain operation.

The washing machine 3 according to an embodiment may open the drawer hole 311a during a circulation operation (3200).

That is, the controller 90 of the washing machine 3 according to an embodiment may control the hole opening/closing device 320 to open the drawer hole 311a during a circulation operation.

The hole opening/closing device 320 may open the hole door 321 based on a control signal from the controller 90 during the circulation operation.

Accordingly, during the circulation operation, water passed through the filter 120 may again flow into the tub 20 through the drawer hole 311a.

According to the disclosure, during a circulation operation, water passed through the filter 12 may be guided to again flow into the tub 20.

Also, according to the disclosure, because the hole door 321 is positioned at an opposite side of a side to which water flows, a major part of water flowed into the inside space of the filter 120 by the pump device 70 may circulate to the tub 20 through the drawer hole 311a by pressure.

Meanwhile, the washing machine 3 according to various embodiments may further include a drain valve (not shown) for opening/closing the case outlet 304b or opening/closing the external guide 84.

**In** the case in which the washing machine 3 further includes the drain valve (not shown) for opening/closing the case outlet 304b or opening/closing the external guide 84, the controller 90 may close the drain valve during a circulation operation.

According to the disclosure, an amount of water that is discharged to the outside of the washing machine 3 during a circulation operation may be reduced.

The washing machine 3 according to an embodiment may close the drawer hole 311a during a drain operation.

That is, the controller 90 of the washing machine 3 according to an embodiment may control the hole opening/closing device 320 to close the drawer hole 311a during a drain operation.

The hole opening/closing device 320 may close the hole door 321 based on a control signal from the controller 90 during the drain operation.

Accordingly, during the drain operation, water passed through the filter 120 may be discharged to the outside through the case outlet 304b.

According to the disclosure, during a drain operation, water passed through the filter 120 may be guided to be discharged to the outside of the washing machine 3.

According to an embodiment, the washing machine 3 may receive a user input for cleaning the filter 120.

The user input for cleaning the filter 120 may be received through the input device 14a of the control panel 14, or from an external device (for example, a user terminal) through the communication module of the washing machine 2.

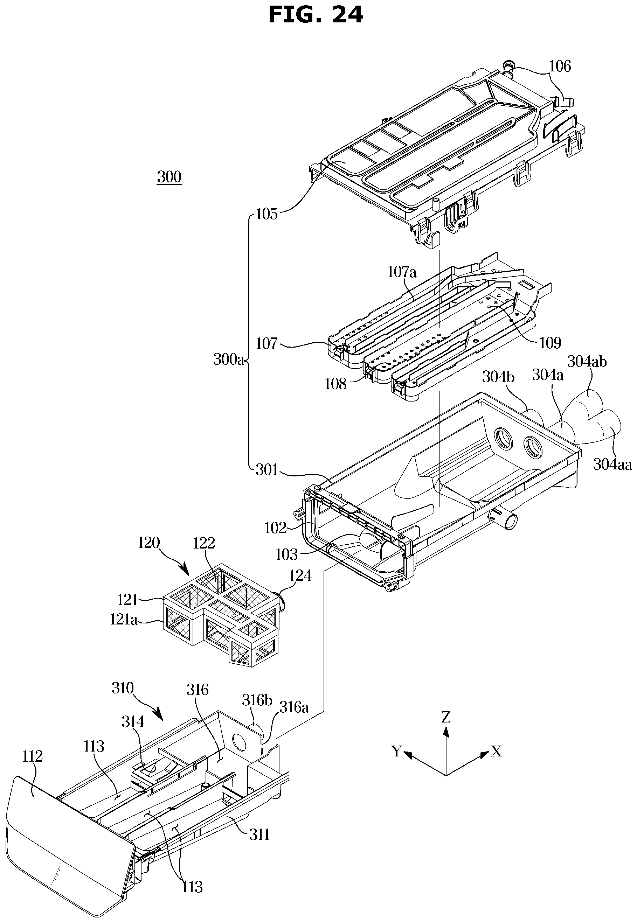

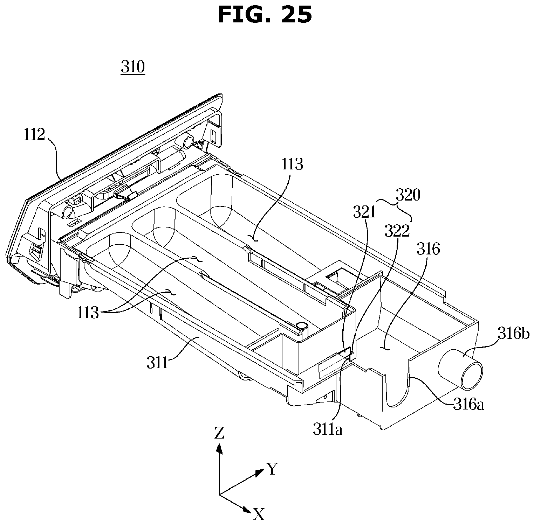

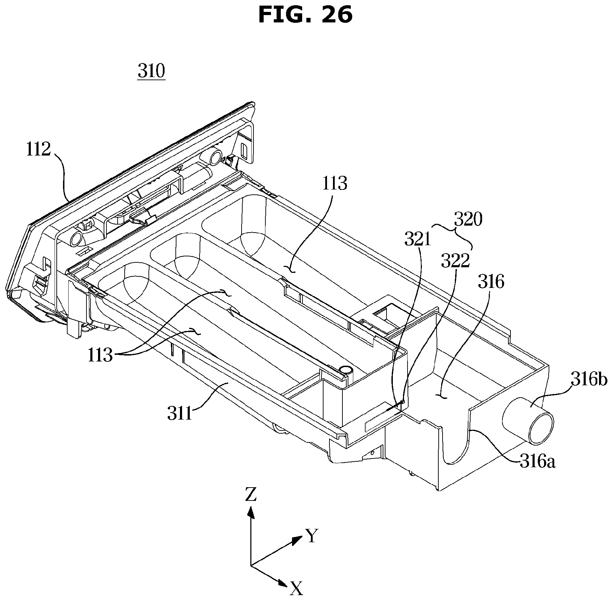

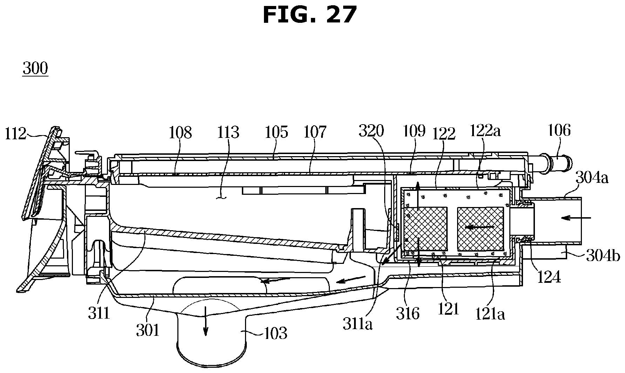

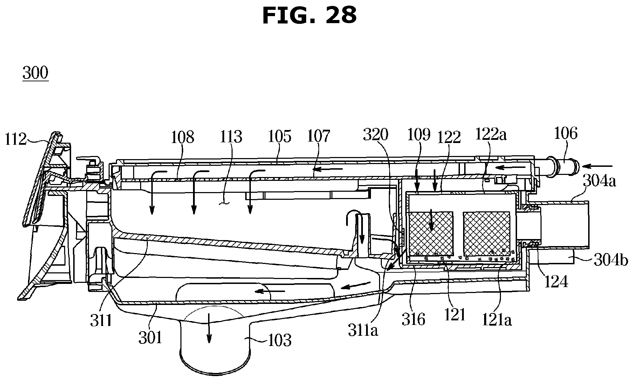

Based on reception of a user input for cleaning the filter 120, the controller 90 may open the water supply valve 62 for a preset time. At this time, the water supply valve 62 may partially open. FIG. 24 shows a cross section of a washing machine according to an embodiment. FIG. 25 is an exploded view of a detergent supply device shown in FIG. 24. FIG. 26 shows a flow of water that is supplied to a detergent accommodating portion, in a cross section of the detergent supply device shown in FIG. 25. FIG. 27 shows a flow of water that is filtered by passing through a filter, in the cross section of the detergent supply device shown in FIG. 25. FIG. 28 shows a flow of water that washes the filter, in the cross section of the detergent supply device shown in FIG. 25.

A washing machine 4 according to an embodiment will be described with reference to FIGS. 24 to 28. In the following description about the washing machine 4 shown in FIGS. 24 to 28, the same components as those of the washing machine 1 shown in FIGS. 1 to 7 are assigned like reference numerals and detailed descriptions thereof will be omitted.

Referring to FIGS. 24 and 28, the washing machine 4 may include a detergent supply device 400 configured to receive water through a water supply device 60a. The detergent supply device 400 may be connected to the pump device 70 through the circulation guide 83. The detergent supply device 400 may be connected to the tub guide 63 to discharge water of the detergent supply device 400 to the tub 20.

The detergent supply device 400 may include a drawer case 400a configured with the case body 101, a case cover 405, and a case guide 407. The case body 101 may have the same configuration as the case body 101 of the detergent supply device 100 shown in FIG. 4. The detergent supply device 400 may include the drawer 110 and the filter 120 having the same configurations as the drawer 110 and the filter 120 of the detergent supply device 100 shown in FIG. 4.

The case cover 405 may include a first water supply port 406a and a second water supply port 406b. The first water supply port 406a may be formed through which water to be supplied to the detergent accommodating portion 113 flows into the drawer case 400a. A plurality of first water supply ports 406a for hot water and cold water may be provided. The second water supply port 406b may be formed through which water to be supplied to the filter 120 flows into the drawer case 400a.

The washing machine 4 may include a first water supply guide 61a connected to the first water supply port 406a. A first water supply valve 62a may be provided in the first water supply guide 61a. The first water supply valve 62a may allow or block supply of water through the first water supply guide 61a.

The washing machine 4 may include a second water supply guide 61b connected to the second water supply port 406b. A second water supply valve 62b may be provided in the second water supply guide 61b. The second water supply valve 62b may allow or block supply of water through the second water supply guide 61b.

The case guide 407 may include the water supply hole 108 that communicates with the detergent accommodating portion 113, and the washing hole 109 that communicates with the filter installing portion 116. The case guide 407 may include a partition 407b for partitioning a first flow path P1 along which water to be supplied to the detergent accommodating portion 113 through the water supply hole 108 flows, from a second flow path P2 along which water to be supplied to the filter installing portion through the washing hole 109 flows. The partition 407b may prevent water provided through the first water supply port 406a from being supplied to the filter installing portion 116 through the washing hole 109. The partition 407b may prevent water provided through the second water supply port 406b from being supplied to the detergent accommodating portion 113 through the water supply hole 108.

Referring to FIGS. 24 and 26, the washing machine 4 according to various embodiments may supply no water to the filter 120 while supplying water to the detergent accommodating portion 113. To this end, the first water supply valve 62a may allow supply of water to the detergent supply device 400 through the first water supply guide 61a, and the second water supply valve 62b may block supply of water to the detergent supply device 400 through the second water supply guide 61b.

Water supplied through the first water supply guide 61a may flow into the detergent supply device 400 through the first water supply port 406a. Water flowed into the space between the case cover 405 and the case guide 407 may be guided to the water supply hole 108 along the first flow path P1 and then discharged to the detergent accommodating portion 113. The water discharged to the detergent accommodating portion 113 may be discharged, together with a detergent in the detergent accommodating portion 113, to the space between the drawer body 111 and the case body 101 through the drawer outlet 114. The water discharged to the space between the drawer body 111 and the case body 101 may be discharged through the tub port 103. The water discharged through the tub port 103 may be guided to the tub 20 through the tub guide 63.

Referring to FIGS. 24 and 27, the washing machine 4 according to various embodiments may filter out, while circulating water in the tub 20, foreign materials from the circulating water.

Water discharged toward the tub 20 from the pump device 70 may be guided along the circulation guide 83. The water guided along the circulation guide 83 may flow into the detergent supply device 400 through the case inlet 104. Water flowed through the case inlet 104 may flow into the inside space of the filter 120 through the filter inlet 124 connected to the case inlet 104. While the water flowed into the inside space of the filter 120 moves to the outside of the filter 120 through the filter portion 122, foreign materials may be filtered out from the water.

The filter portion 122 may include the filter side 122a that faces the inside of the filter 120. While water flowed through the filter inlet 124 moves from the inside of the filter 120 to the outside, foreign materials may be filtered out from the water, and the foreign materials filtered out by passing through the filter portion 122 may be collected on the filter side 122a of the filter portion 122.

The water which has passed through the filter 120 and from which foreign materials have been filtered out may be discharged to the space between the drawer body 111 and the case body 101 from the filter installing portion 116 through the drawer outlet 114. The water discharged to the space between the drawer body 111 and the case body 101 may be discharged through the tub port 103. The water discharged through the tub port 103 may be guided to the tub 20 through the tub guide 63.

According to this configuration, because the washing machine 4 according to various embodiments filters out foreign materials from water circulating through the tub 20, an amount of foreign materials that are discharged from the washing machine 4, particularly, an amount of foreign materials having fine sizes may be reduced.

Referring to FIGS. 24 and 28, the washing machine 4 according to various embodiments may supply no water to the detergent accommodating portion 113 while supplying water to the filter 120. To this end, the first water supply valve 62a may block supply of water to the detergent supply device 400 through the first water supply guide 61a, and the second water supply valve 62b may allow supply of water to the detergent supply device 400 through the second water supply guide 61b.

Water supplied through the second water supply guide 61b may flow into the detergent supply device 400 through the second water supply port 406b. Water flowed into the space between the case cover 405 and the case guide 407 may be guided to the washing hole 109 along the second flow path P2 and then discharged to the filter installing portion 116. The water discharged to the filter installing portion 116 may be discharged toward the filter 120. Water discharged through the washing hole 109 may be discharged toward the outer side of the filter 120. The water discharged through the washing hole 109 may be discharged to the opposite side of the filter side 122a of the filter 120. Because water is supplied to the side of the filter 120, which is opposite to the filter surface 122 where foreign materials are collected, the foreign materials collected on the filter side 122a may be separated from the filter side 122a. Foreign materials collected on the filter side 122a of the filter portion 122, positioned at the upper side of the filter 120 facing the washing hole 109, may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the drawer body 111 and the case body 101 from the filter installing portion 116 through the drawer outlet 114. The water moved to the space between the drawer body 111 and the case body 101 may be discharged through the tub port 103. The water discharged through the tub port 103 may be discharged to the tub 20 through the tub guide 63.

According to this configuration, the washing machine 4 according to various embodiments may wash the filter 120 with water supplied through the water supply device 60a, thereby extending a life span of the filter 120 and increasing a replacement cycle of the filter 120. Because the washing machine 4 according to various embodiments supplies no water to the detergent accommodating portion 113 while supplying water to the detergent supply device 400 to wash the filter 120, the washing machine 4 may reduce water consumption.

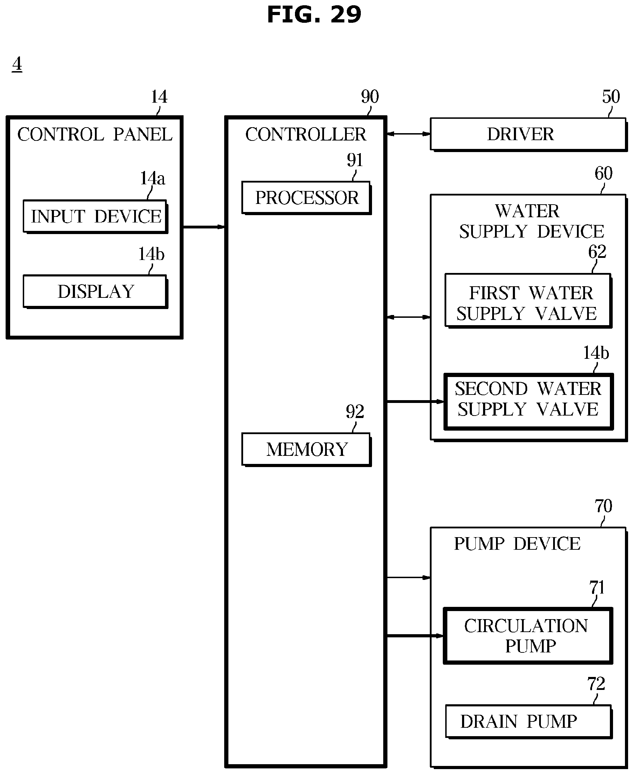

FIG. 29 is a control block diagram of a washing machine according to an embodiment.

Components of the washing machine 4 according to an embodiment will be described with reference to FIG. 29, and descriptions about the same components as those of the washing machine 1, 2, or 3 according to an embodiment will be omitted.

Referring to FIG. 23, the washing machine 4 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The water supply device 60 may provide water supplied from an external water source to the inside of the tub 20 based on a control signal from the controller 90.

The water supply device 60 according to an embodiment may include the first water supply valve 62a provided in the first water supply guide 61a to supply water to the first water supply port 406a, and the second water supply valve 62b provided in the second water supply guide 61b to supply water to the second water supply port 406b.

According to various embodiments, the first water supply valve 62a and the second water supply valve 62b may be on-off valves.

Water supplied through the first water supply guide 61a may flow into the detergent supply device 400 through the first water supply port 406a and be guided to the water supply hole 108.

Water supplied through the second water supply guide 61b may flow into the detergent supply device 400 through the second water supply port 406b and be guided to the washing hole 109.

The pump device 70 may include the circulation pump 71 and the drain pump 72. Water pumped by the circulation pump 71 of the pump device 70 of the washing machine 4 according to an embodiment may flow into the tub 20 via the detergent supply device 400.

Water pumped by the drain pump 72 of the pump device 70 of the washing machine 4 according to an embodiment may be discharged to the outside without passing through the detergent supply device 400.

The controller 90 of the washing machine 4 according to an embodiment may open the first water supply valve 62a to supply water. The controller 90 of the washing machine 4 according to an embodiment may close the first water supply valve 62a based on satisfaction of a water supply termination condition.

Water supplied to the detergent supply device 400 through the first water supply port 406a during water supply may flow into the water supply hole 108.

The controller 90 may drive the circulation pump 71 of the pump device 70 for a circulation operation. During the circulation operation, water pumped by the circulation pump 71 of the pump device 70 according to an embodiment may flow into the tub 20 via the detergent supply device 100. According to a circulation operation in which water from which foreign materials have been removed flows into the tub 20, more efficient washing may be performed.

Meanwhile, in the washing machine 4 according to an embodiment, foreign materials may be collected in the filter 120 during a circulation operation.

The washing machine 4 according to an embodiment may drive the water supply device 60 for a preset time during a drain operation.

According to various embodiments, the controller 90 may open the second water supply valve 62b for the preset time during water supply. A time for which the first water supply valve 62a opens during water supply may be shorter than a time for which the second water supply valve 62b opens.

According to an embodiment, by opening the second water supply valve 62b during a drain operation, foreign materials collected on the filter side 122a during a circulation operation may be removed.

According to the disclosure, by pushing foreign materials collected on the filter side 122a during a circulation operation to another side, an effect of extending the life span of the filter 120 may be expected.

According to an embodiment, the washing machine 4 may receive a user input for cleaning the filter 120.

The user input for cleaning the filter 120 may be received through the input device 14a of the control panel 14, or from an external device (for example, a user terminal) through the communication module of the washing machine 4.

The controller 90 may open the second water supply valve 62b for a preset time based on reception of a user input for cleaning the filter 120.

According to the disclosure, by performing an operation of cleaning the filter 120 according to a user's intention, the user's convenience may be improved.

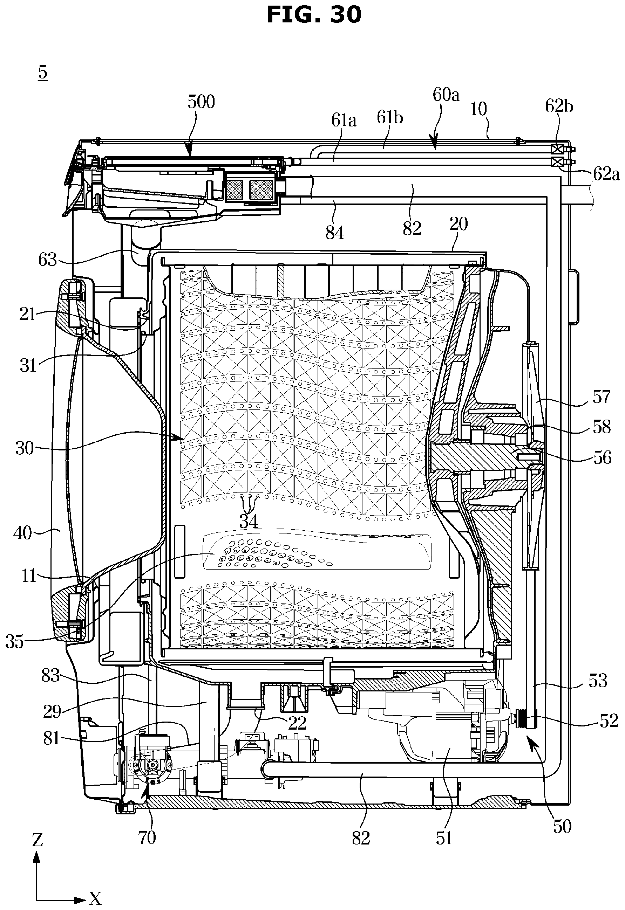

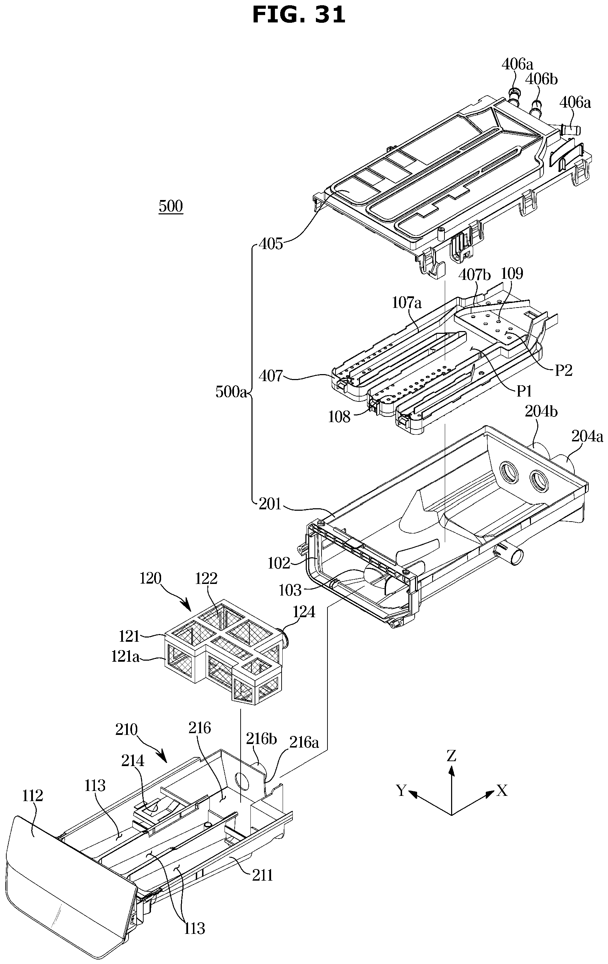

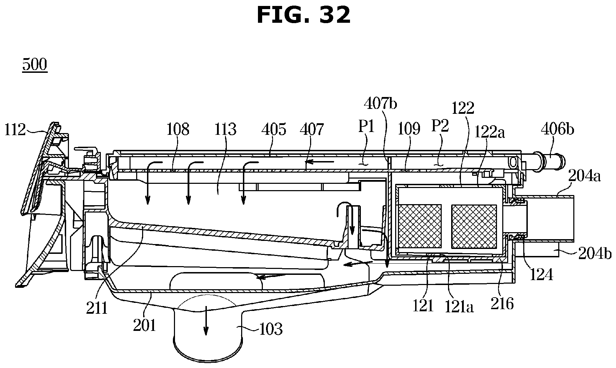

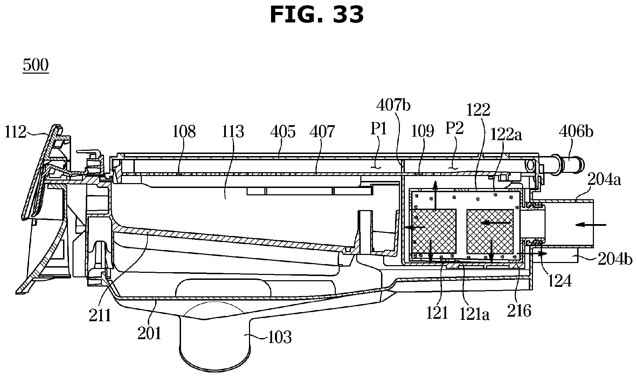

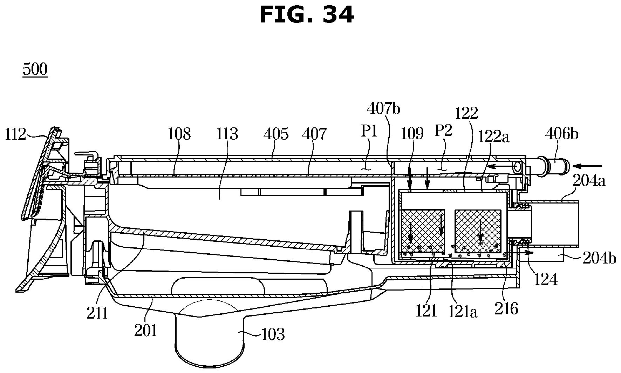

FIG. 30 shows a cross section of a washing machine according to an embodiment. FIG. 31 is an exploded view of a detergent supply device shown in FIG. 30. FIG. 32 shows a flow of water that is supplied to a detergent accommodating portion, in a cross section of a detergent supply device shown in FIG. 30. FIG. 33 shows a flow of water that is filtered by passing through a filter, in the cross section of the detergent supply device shown in FIG. 30. FIG. 34 shows a flow of water that washes the filter, in the cross section of the detergent supply device shown in FIG. 30.

A washing machine 5 according to an embodiment will be described with reference to FIGS. 30 to 34. In the following description about the washing machine 5 shown in FIGS. 30 to 34, the same components as those of the washing machine 2 shown in FIGS. 9 to 13 and the washing machine 4 shown in FIGS. 24 to 28 are assigned like reference numerals and detailed descriptions thereof may be omitted.

Referring to FIGS. 30 and 31, the washing machine 5 may include a detergent supply device 50 configured to receive water through the water supply device 60a. The detergent supply device 500 may be connected to the pump device 70 through the drain guide 82. The detergent supply device 500 may be connected to the external guide 84 to discharge water in the detergent supply device 500 to outside of the washing machine 5.

The detergent supply device 500 may include a drawer case 500a configured with the case body 201, the case cover 405, and the case guide 407. The detergent supply device 500 may include the case body 201 having the same configuration as the case body 201 of the detergent supply device 200 shown in FIG. 10. The detergent supply device 500 may include the drawer 210 and the filter 120 having the same configurations as the drawer 210 and the filter 120 of the detergent supply device 200 shown in FIG. 10. The detergent supply device 500 may include the case cover 405 and the case guide 407 having the same configurations as the case cover 405 and the case guide 407 shown in FIG. 25.

Referring to FIGS. 30 and 32, the washing machine 5 according to various embodiments may supply no water to the filter 120 while supplying water to the detergent accommodating portion 113. To this end, the first water supply valve 62a may allow supply of water to the detergent supply device 500 through the first water supply guide 61a, and the second water supply valve 62b may block supply of water to the detergent supply device 500 through the second water supply guide 61b.

Water supplied through the first water supply guide 61a may flow into the detergent supply device 500 through the first water supply port 406a. Water flowed into the space between the case cover 405 and the case guide 407 may be guided to the water supply hole 108 along the first flow path P1 and then discharged to the detergent accommodating portion 113. The water discharged to the detergent accommodating portion 113 may be discharged together with a detergent in the detergent accommodating portion 113 to the space between the drawer body 211 and the case body 201 through the drawer outlet 214. The water discharged to the space between the drawer body 211 and the case body 201 may be discharged through the tub port 103. The water discharged through the tub port 103 may be guided to the tub 20 through the tub guide 63.

Referring to FIGS. 30 and 33, the washing machine 5 according to various embodiments may filter out, while discharging water in the tub 20 to the outside of the washing machine 5, foreign materials from the water that is discharged.

Water that is discharged from the pump device 70 toward the tub 20 may be guided along the drain guide 82. The water guided along the drain guide 82 may flow into the detergent supply device 500 through the case inlet 204a. The water flowed through the case inlet 204a may flow into the inside space of the filter 120 through the filter inlet 124 connected to the case inlet 204a. While the water flowed into the inside space of the filter 120 moves to the outside of the filter 120 through the filter portion 122, foreign materials may be filtered out from the water.

The filter portion 122 may include the filter side 122a that faces the inside of the filter 120. While water passed through the filter inlet 124 moves from the inside of the filter 120 to the outside, foreign materials may be filtered out from the water and the foreign materials filtered out by passing through the filter portion 122 may be collected on the filter side 122a of the filter portion 122.

The water which has passed through the filter 120 and from which foreign materials have been filtered out may move to the space between the filter installing portion 216 and the filter 120. The water moved to the space between the filter installing portion 216 and the filter 120 may pass through the drain port 216b and the case outlet 204b sequentially and then be discharged from the detergent supply device 500. The water discharged through the case outlet 204b may be discharged to the outside of the washing machine 5 through the external guide 84.

According to this configuration, because the washing machine 5 according to various embodiments is capable of filtering out foreign materials from water discharged from the tub 20, an amount of foreign materials that are discharged from the washing machine 2, particularly, an amount of foreign materials having fine sizes may be reduced.

Referring to FIGS. 30 and 34, the washing machine 5 according to various embodiments may supply no water to the detergent accommodating portion 113 while supplying water to the filter 120. To this end, the first water supply valve 62a may block supply of water to the detergent supply device 500 through the first water supply guide 61a, and the second water supply valve 62b may allow supply of water to the detergent supply device 500 through the second water supply guide 61b.

Water supplied through the second water supply guide 61b may flow into the detergent supply device 400 through the second water supply port 406b. Water flowed into the space between the case cover 405 and the case guide 407 may be guided to the washing hole 109 along the second flow path P2 and then discharged to the filter installing portion 216. The water discharged to the filter installing portion 216 may be discharged toward the filter 120. The water discharged through the washing hole 109 may be discharged toward the outer side of the filter 120. The water discharged through the washing hole 109 may be discharged to the opposite side of the filter side 122a of the filter 120. Because water is supplied to the side of the filter 120, which is opposite to the filter side 122a where foreign materials are collected, foreign materials collected on the filter side 122a may be separated from the filter side 122a. Foreign materials collected on the filter side 122a of the filter portion 122, positioned at the upper side of the filter 120 facing the washing hole 109 may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the filter installing portion 216 and the filter 120. The water moved to the space between the filter installing portion 216 and the filter 120 may pass through the drain port 216b and the case outlet 204b sequentially and then be discharged from the detergent supply device 500. The water discharged through the case outlet 204b may be discharged to the outside of the washing machine 5 through the external guide 84.

According to this configuration, the washing machine 5 according to various embodiments may wash the filter 120 with water supplied through the water supply device 60a, thereby extending a life span of the filter 120 and increasing a replacement cycle of the filter 120.

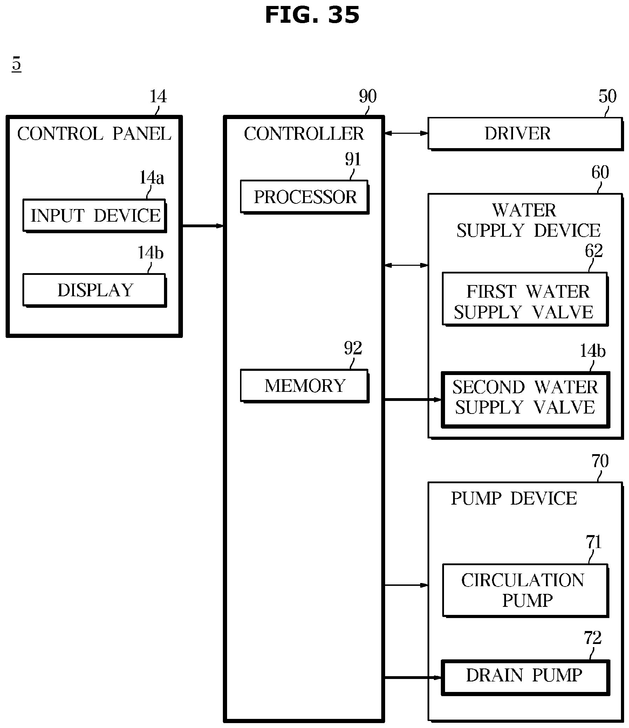

FIG. 35 is a control block diagram of a washing machine according to an embodiment.

Components of the washing machine 5 according to an embodiment will be described with reference to FIG. 35, and descriptions about the same components as those of the washing machine 1, 2, 3, or 4 according to an embodiment will be omitted.

Referring to FIG. 35, the washing machine 5 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The water supply device 60 may provide water supplied from an external water source to the inside of the tub 20 based on a control signal from the controller 90.

The water supply device 60 according to an embodiment may include the first water supply valve 62a provided in the first water supply guide 61a to supply water to the first water supply port 406a, and the second water supply valve 62b provided in the second water supply guide 61b to supply water to the second water supply port 406b.

According to various embodiments, the first water supply valve 62a and the second water supply valve 62b may be on-off valves.

Water supplied through the first water supply guide 61a may flow into the detergent supply device 500 through the first water supply port 406a and be guided to the water supply hole 108.

Water supplied through the second water supply guide 61b may flow into the detergent supply device 500 through the second water supply port 406b and be guided to the washing hole 109. The controller 90 of the washing machine 5 according to an embodiment may open the first water supply valve 62a to supply water. The controller 90 of the washing machine 5 according to an embodiment may close the first water supply valve 62a based on satisfaction of a water supply termination condition.

Water supplied to the detergent supply device 500 through the first water supply port 406a during water supply may flow into the water supply hole 108.

According to various embodiments, the controller 90 of the washing machine 5 according to an embodiment may open the second water supply valve 62b for a preset time during water supply. A time for which the first water supply valve 62a opens during water supply may be shorter than a time for which the second water supply valve 62b opens.

For drainage, the controller 90 may drive the drain pump 72 of the pump device 70. During drainage (1014), water pumped by the drain pump 72 of the pump device 70 may be discharged to the outside via the detergent supply device 500. According to a drain operation in which water from which foreign materials have been removed is discharged to the outside of the tub 20, environmental pollution may be prevented.

In the washing machine 5 according to an embodiment, because water flows into the filter 120 during a drain operation, foreign materials may flow to the filter side 122a.

While a water level of the tub 20 is high, a large amount of water may flow into the filter 120, and accordingly, even though the second water supply valve 62b is opened, it may be difficult to efficiently remove foreign materials collected on the filter side 122a.

However, while a water level of the tub 20 is low, a small amount of water may flow into the filter 120, and the water may not reach the filter side 122a. Accordingly, by opening the water supply valve 62, foreign materials collected on the filter side 122a may be efficiently removed.

The controller 90 of the washing machine 5 according to an embodiment may wash the filter side 122a by opening the second water supply valve 62b in the state in which an amount of water flowed into the filter 120 of the tub 20 is small during a drain operation.

According to an embodiment, based on a water level of the tub 20 being lower than a preset water level (for example, a reset water level) during a drain operation, the controller 90 may open the second water supply valve 62b for a preset time. To this end, the washing machine 5 may further include a water level sensor.

As another example, based on a load of the pump device 70 being smaller than a preset value during a drain operation, the controller 90 of the washing machine 5 may open the second water supply valve 62b for the preset time.

As another example, based on elapse of a predefined time from a start time of a drain operation, the controller 90 of the washing machine 5 may open the second water supply valve 62b for the preset time.

According to the disclosure, foreign materials collected on the filter side 122a may be efficiently removed during a drain operation.

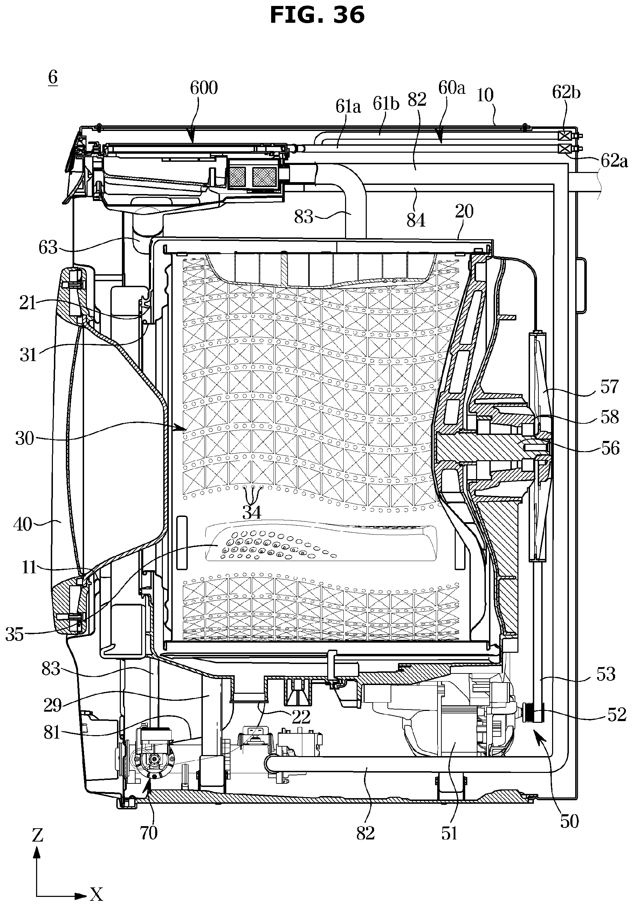

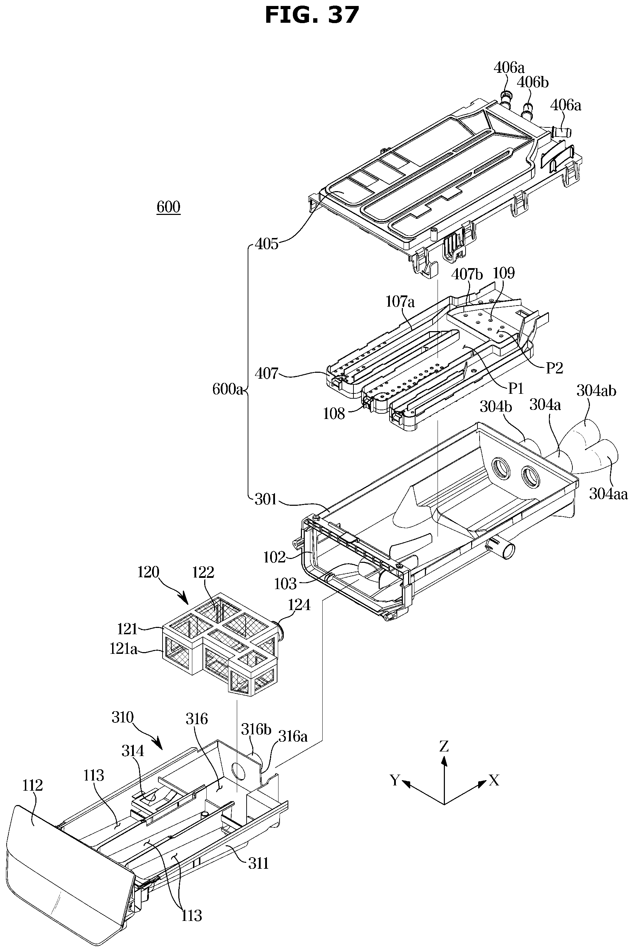

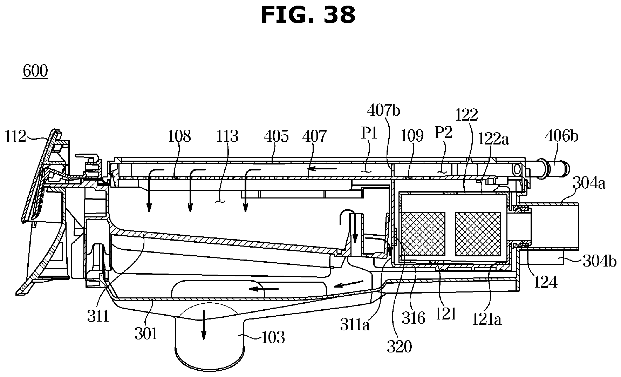

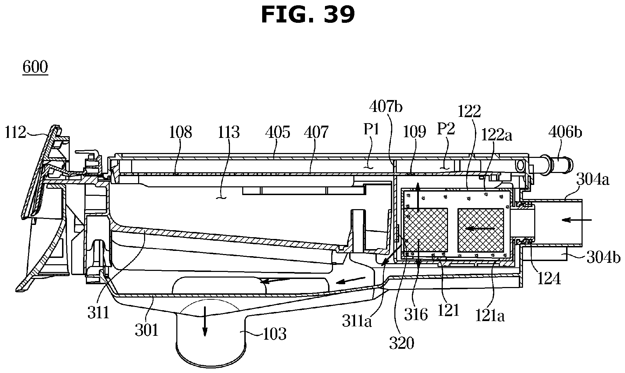

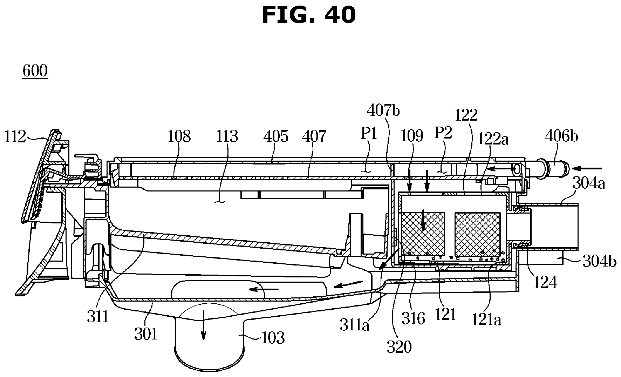

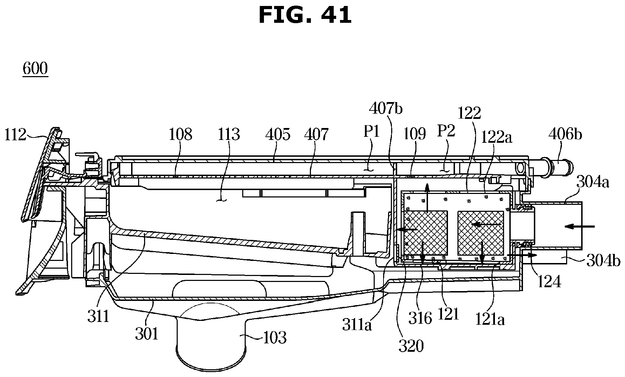

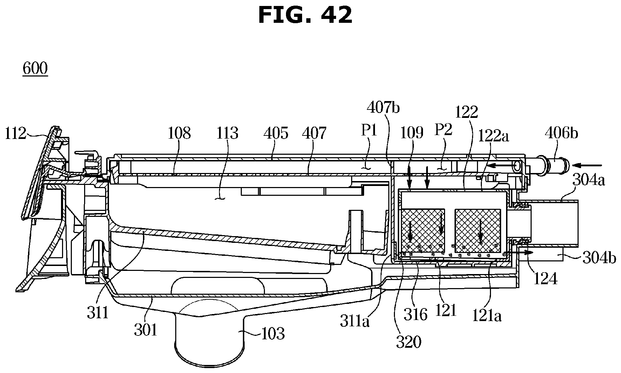

FIG. 36 shows a cross section of a washing machine according to an embodiment. FIG. 37 is an exploded view of a detergent supply device shown in FIG. 36. FIG. 38 shows a flow of water that is supplied to a detergent accommodating portion, in a cross section of the detergent supply device shown in FIG. 37. FIG. 39 shows a flow of water that is supplied from a pump device and then discharged to a tub, in the cross section of the detergent supply device shown in FIG. 37. FIG. 40 shows a flow of water that washes a filter and then is discharged to the tub, in the cross section of the detergent supply device shown in FIG. 37. FIG. 41 shows a flow of water that is supplied from the pump device and then is discharged to outside of the washing machine, in the cross section of the detergent supply device shown in FIG. 37. FIG. 42 shows a flow of water that washes the filter and then is discharged to the outside of the washing machine, in the cross section of the detergent supply device shown in FIG. 37.

A washing machine 6 according to an embodiment will be described with reference to FIGS. 36 to 42. **In** the following description about the washing machine 2 shown in FIGS. 36 to 42, the same components as those of the washing machine 3 shown in FIGS. 15 to 22 and the washing machine 4 shown in FIGS. 24 to 28 are assigned like reference numerals and detailed descriptions thereof will be omitted.

Referring to FIGS. 36 to 38, the washing machine 6 may include a detergent supply device 600 configured to receive water through the water supply device 60a. The detergent supply device 600 may be connected to the pump device 70 through the drain guide 82 and the circulation guide 83. The detergent supply device 600 may be connected to the tub guide 63 to discharge water in the detergent supply device 600 to the tub 20. The detergent supply device 600 may be connected to the external guide 84 to discharge water in the detergent supply device 600 to outside of the washing machine 6.

The detergent supply device 600 may include a drawer case 600a configured with the case body 301, the case cover 405, and the case guide 407. The detergent supply device 600 may include the case body 301 having the same configuration as the case body 301 of the detergent supply device 300 shown in FIG. 16. The detergent supply device 600 may include the drawer 310 and the filter 120 having the same configurations as the drawer 310 and the filter 120 of the detergent supply device 300 shown in FIG. 16. The detergent supply device 600 may include the case cover 405 and the case guide 407 having the same configurations as the case cover 405 and the case guide 407 shown in FIG. 25.

Referring to FIGS. 36 and 38, the washing machine 6 according to various embodiments may supply no water to the filter 120 while supplying water to the detergent accommodating portion 113. To this end, the first water supply valve 62a may allow supply of water to the detergent supply device 600 through the first water supply guide 61a, and the second water supply valve 62b may block supply of water to the detergent supply device 400 through the second water supply guide 61b. The hole opening/closing device 320 may open or close the drawer hole 311a.

Water supplied through the first water supply guide 61a may flow into the detergent supply device 600 through the first water supply port 406a. Water flowed into the space between the case cover 405 and the case guide 407 may be guided to the water supply hole 108 along the first flow path P1 and then discharged to the detergent accommodating portion 113. The water discharged to the detergent accommodating portion 113 may be discharged together with a detergent in the detergent accommodating portion 113 to the space between the drawer body 311 and the case body 301 through the drawer outlet 314. The water discharged to the space between the drawer body 311 and the case body 301 may be discharged through the tub port 103. The water discharged through the tub port 103 may be guided to the tub 20 through the tub guide 63.

Referring to FIGS. 36 and 39, the washing machine 6 according to various embodiments may filter out, while circulating water in the tub 20, foreign materials from the circulating water. While water in the tub 20 circulates, the hole opening/closing device 320 may open the drawer hole 311a.

Water discharged from the pump device 70 toward the tub 20 may be guided along the circulation guide 83. The water guided along the circulation guide 83 may flow into the detergent supply device 600 through the circulation case inlet 304aa of the case inlet 304a. The water flowed through the circulation case inlet 304aa of the case inlet 304a may flow into the inside space of the filter 120 through the filter inlet 124 connected to the case inlet 304a. While the water flowed into the inside space of the filter 120 moves to the outside of the filter 120 through the filter portion 122, foreign materials may be filtered out from the water.

The filter portion 122 may include the filter side 122a that faces the inside of the filter 120. While water passed through the filter inlet 124 moves from the inside of the filter 120 to the outside, foreign materials may be filtered out from the water and the foreign materials filtered out by passing through the filter portion 122 may be collected on the filter side 122a of the filter portion 122.

The water which has passed through the filter 120 and from which foreign materials have been filtered out may move to the space between the drawer body 311 and the case body 301 from the filter installing portion 316 through the drawer hole 311a. The water discharged to the space between the drawer body 311 and the case body 301 may be discharged through the tub port 103. The water discharged through the tub port 103 may be guided to the tub 20 through the tub guide 63.

According to this configuration, because the washing machine 6 according to various embodiments filters out foreign materials from water circulating through the tub 20, an amount of foreign materials that are discharged from the washing machine 6, particularly, an amount of foreign materials having fine sizes may be reduced.

Referring to FIGS. 36 and 40, the washing machine 6 according to various embodiments may supply no water to the detergent accommodating portion 113 while supplying water to the filter 120. To this end, the first water supply valve 62a may block supply of water to the detergent supply device 600 through the first water supply guide 61a, and the second water supply valve 62b may allow supply of water to the detergent supply device 600 through the second water supply guide 61b. The hole opening/closing device 320 may open the drawer hole 311a.

Water supplied through the second water supply guide 61b may flow into the detergent supply device 600 through the second water supply port 406b. Water flowed into the space between the case cover 405 and the case guide 407 may be guided to the washing hole 109 along the second flow path P2 and then discharged to the filter installing portion 116. The water discharged to the filter installing portion 116 may be discharged toward the filter 120. Water discharged through the washing hole 109 may be discharged toward the outer side of the filter 120. The water discharged through the washing hole 109 may be discharged to the opposite side of the filter side 122a of the filter 120. Because water is supplied to the side of the filter 120, which is opposite to the filter side 122a where foreign materials are collected, the foreign materials collected on the filter side 122a may be separated from the filter side 122a. Foreign materials collected on the filter side 122a of the filter portion 122, positioned at the upper side of the filter 120 facing the washing hole 109 may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the drawer body 311 and the case body 301 from the filter installing portion 316 through the drawer hole 311a. The water moved to the space between the drawer body 311 and the case body 301 may be discharged through the tub port 103. The water discharged through the tub port 103 may be discharged to the tub 20 through the tub guide 63.

According to this configuration, the washing machine 6 according to various embodiments may wash the filter 120 with water supplied through the water supply device 60a, thereby extending a life span of the filter 120 and increasing a replacement cycle of the filter 120. Because the washing machine 6 according to various embodiments supplies no water to the detergent accommodating portion 113 while supplying water to the detergent supply device 400 to wash the filter 120, the washing machine 6 may reduce water consumption.

Referring to FIGS. 36 and 41, the washing machine 6 according to various embodiments may filter out, while discharging water in the tub 20 to the outside of the washing machine 6, foreign materials from water that is discharged. While water in the tub 20 is discharged to the outside of the washing machine 6, the hole opening/closing device 320 may close the drawer hole 311a.

Water that is discharged from the pump device 70 toward the tub 20 may be guided along the drain guide 82. The water guided along the drain guide 82 may flow into the detergent supply device 600 through the drain case inlet 304ab of the case inlet 304a. The water flowed through the drain case inlet 304ab of the case inlet 304a may flow into the inside space of the filter 120 through the filter inlet 124 connected to the case inlet 304a. While the water flowed into the inside space of the filter 120 moves to the outside of the filter 120 through the filter portion 12, foreign materials may be filtered out from the water.

The filter portion 122 may include the filter side 122a that faces the inside of the filter 120. While water flowed through the filter inlet 124 moves from the inside of the filter 120 to the outside, foreign materials may be filtered out from the water and the foreign materials filtered out by passing through the filter portion 122 may be collected on the filter side 122a of the filter portion 122.

The water which has passed through the filter 120 and from which foreign materials have been filtered out may be discharged to the space between the filter installing portion 316 and the filter 120. The water discharged to the space between the filter installing portion 316 and the filter 120 may pass through the drain port 316b and the case outlet 304b sequentially and then be discharged from the detergent supply device 600. The water discharged through the case outlet 304b may be discharged to the outside of the washing machine 6 through the external guide 84.

According to this configuration, because the washing machine 6 according to various embodiments is capable of filtering out foreign materials from water discharged from the tub 20, an amount of foreign materials that are discharged from the washing machine 6, particularly, an amount of foreign materials having fine sizes may be reduced.

Referring to FIGS. 36 and 42, the washing machine 6 according to various embodiments may supply no water to the detergent accommodating portion 113 while supplying water to the filter 120. To this end, the first water supply valve 62a may block supply of water to the detergent supply device 400 through the first water supply guide 51a, and the second water supply valve 62b may allow supply of water to the detergent supply device 400 through the second water supply guide 61b. The hole opening/closing device 320 may close the drawer hole 311a.

Water supplied through the second water supply guide 61b may flow into the detergent supply device 600 through the second water supply port 406b. Water flowed into the space between the case cover 405 and the case guide 407 may be guided to the washing hole 109 along the second flow path P2 and then discharged to the filter installing portion 316. The water discharged to the filter installing portion 316 may be discharged toward the filter 120. Water discharged through the washing hole 109 may be discharged toward the outer side of the filter 120. The water discharged through the washing hole 109 may be discharged to the opposite side of the filter side 122a of the filter 120. Because water is supplied to the side of the filter 120, which is opposite to the filter side 122a where foreign materials are collected, foreign materials collected on the filter side 122a may be separated from the filter side 122a. Foreign materials collected on the filter side 122a of the filter portion 122, positioned at the upper side of the filter 120 facing the washing hole 109 may move to the lower portion of the filter 120. At least a part of foreign materials collected on the filter side 122a of the filter portion 122, positioned at the front, rear, left, or right sides of the filter 120 may move to the lower portion of the filter 120.

The water washed the filter 120 may move to the space between the filter installing portion 316 and the filter 120. The water moved to the space between the filter installing portion 316 and the filter 120 may pass through the drain port 316b and the case outlet 304b sequentially and then be discharged from the detergent supply device 600. The water discharged through the case outlet 304b may be discharged to the outside of the washing machine 6 through the external guide 84.

According to this configuration, the washing machine 6 according to various embodiments may wash the filter 120 with water supplied through the water supply device 60a, thereby extending a life span of the filter 120 and increasing a replacement cycle of the filter 120.

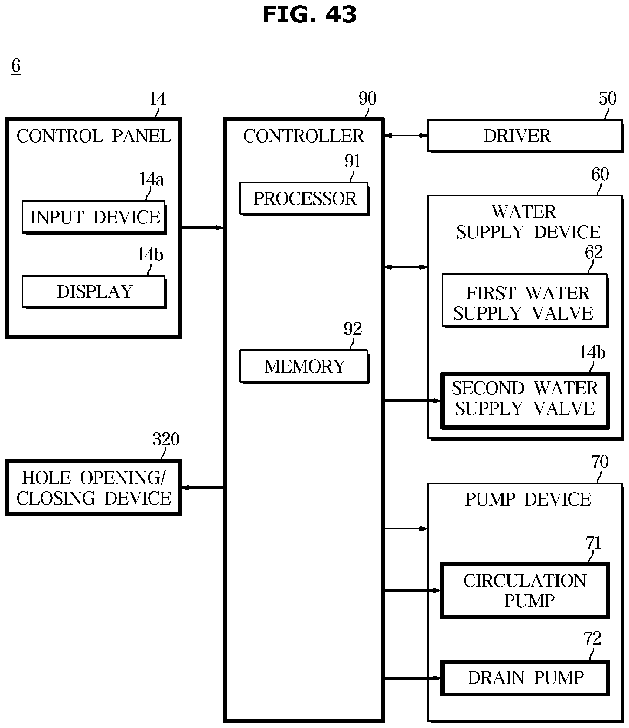

FIG. 43 is a control block diagram of a washing machine according to an embodiment.

Components of the washing machine 6 according to an embodiment will be described with reference to FIG. 43, and descriptions about the same components as those of the washing machine 1, 2, 3, 4, or 5 according to an embodiment will be omitted.

Referring to FIG. 35, the washing machine 6 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The washing machine 6 according to an embodiment may further include the hole opening/closing device 320.

The hole opening/closing device 320 may include the hole door 321, and the door driver 322 for operating the hole door 321. According to the hole opening/closing device 320 opening/closing the drawer hole 311a, the filter installing portion 316 may selectively communicate with the space between the drawer body 311 and the case body 301.

The water supply device 60 may provide water supplied from an external water source to the inside of the tub 20 based on a control signal from the controller 90.

The water supply device 60 according to an embodiment may include the first water supply valve 62a provided in the first water supply guide 61a to supply water to the first water supply port 406a, and the second water supply valve 62b provided in the second water supply guide 61b to supply water to the second water supply port 406b.

According to various embodiments, the first water supply valve 62a and the second water supply valve 62b may be on-off valves.

Water supplied through the first water supply guide 61a may flow into the detergent supply device 600 through the first water supply port 406a and be guided into the water supply hole 108.

Water supplied through the second water supply guide 61b may flow into the detergent supply device 600 through the second water supply port 406b and be guided into the washing hole 109. The controller 90 of the washing machine 6 according to an embodiment may open the first water supply valve 62a to supply water. The controller 90 of the washing machine 6 according to an embodiment may close the first water supply valve 62a based on satisfaction of a water supply termination condition.

Water supplied into the detergent supply device 600 through the first water supply port 406a during water supply may flow into the water supply hole 108.

According to various embodiments, the controller 90 of the washing machine 6 according to an embodiment may open the second water supply valve 62b for a preset time during water supply. A time for which the first water supply valve 62a opens during water supply may be shorter than a time for which the second water supply valve 62b opens.

The controller 90 may drive the circulation pump 71 of the pump device 70 for a circulation operation. During the circulation operation, water pumped by the circulation pump 71 of the pump device 70 of the washing machine 6 according to an embodiment may flow into the tub 20 via the detergent supply device 600. According to a circulation operation in which water from which foreign materials have been removed flows into the tub 20, more efficient washing may be performed.

For drainage, the controller 90 may drive the drain pump 72 of the pump device 70. During drainage, water pumped by the drain pump 72 of the pump device 70 of the washing machine 3 according to an embodiment may be discharged to the outside via the detergent supply device 300. According to a drain operation in which water from which foreign materials have been removed is discharged to the outside of the tub 20, environmental pollution may be further prevented.

In the washing machine 6 according to an embodiment, foreign materials may be collected on the filter 120 during a drain operation and a circulation operation.

The washing machine 6 according to an embodiment may drive the water supply device 60 for the preset time during a drain operation.

For example, the controller 90 according to an embodiment may open the second water supply valve 62b for the preset time during a drain operation.

According to the disclosure, by opening the second water supply valve 62b during a drain operation, foreign materials collected on the filter side 122a during a circulation operation may be removed.

While a water level of the tub 20 is high, a large amount of water may flow into the filter 120, and accordingly, even though the second water supply valve 62b is opened, it may be difficult to efficiently remove foreign materials collected on the filter side 122a.

However, while a water level of the tub 20 is low, a small amount of water may flow into the filter 120, and the water may not reach the filter side 122a. Accordingly, by opening the second water supply valve 62b, foreign materials collected on the filter side 122a may be efficiently removed.

The controller 90 may wash the filter side 122a by opening the second water supply valve 62b in the state in which an amount of water flowed into the filter 120 of the tub 20 is small during a drain operation.

According to an embodiment, based on a water level of the tub 20 being lower than a preset water level (for example, a reset water level) during a drain operation, the controller 90 may open the second water supply valve 62b for the preset time. To this end, the washing machine 2 may further include a water level sensor (not shown).

As another example, based on a load of the pump device 70 being smaller than a preset value during a drain operation, the controller 90 may open the second water supply valve 62b for the preset time.

As another example, based on elapse of a predefined time from a start time of a drain operation, the controller 90 may open the second water supply valve 62b for the preset time.

According to an embodiment, foreign materials collected on the filter side 122a may be efficiently removed during a drain operation.

The washing machine 6 according to an embodiment may open the drawer hole 311a during a circulation operation (3200).

That is, the controller 90 of the washing machine 6 according to an embodiment may control the hole opening/closing device 320 to open the drawer hole 311a during a circulation operation.

The hole opening/closing device 320 may open the hole door 321 based on a control signal from the controller 90 during the circulation operation.

Accordingly, water passed through the filter 120 during the circulation operation may again flow into the tub 20 through the drawer hole 311a.

According to the disclosure, water passed through the filter 120 during a circulation operation may be guided to again flow into the tub 20.

Also, according to the disclosure, because the hole door 321 is positioned at an opposite side of a side to which water flows, a major part of water flowed into the inside space of the filter 120 by the pump device 70 may circulate to the tub 20 through the drawer hole 311a by pressure.

Meanwhile, according to various embodiments, the washing machine 6 may further include a drain valve (not shown) for opening/closing the case outlet 304b or opening/closing the external guide 84.

In the case in which the washing machine 6 further includes a drain valve (not shown) for opening/closing the case outlet 304b or opening/closing the external guide 84, the controller 90 may close the drain valve during a circulation operation.

According to the disclosure, an amount of water that is discharged to the outside of the washing machine 6 during a circulation operation may be reduced.

The washing machine 6 according to an embodiment may close the drawer hole 311a during a drain operation.

That is, the controller 90 of the washing machine 6 according to an embodiment may control the hole opening/closing device 320 to close the drawer hole 311a during a drain operation.

The hole opening/closing device 320 may close the hole door 321 based on a control signal from the controller 90 during the drain operation.

Accordingly, water passed through the filter 120 during the drain operation may be discharged to the outside through the case outlet 304b.

According to the disclosure, during a drain operation, water passed through the filter 120 may be guided to be discharged to the outside of the washing machine 6.

According to an embodiment, the washing machine 6 may receive a user input for cleaning the filter 120.

The user input for cleaning the filter 120 may be received through the input device 14a of the control panel 14, or from an external device (for example, a user terminal) through a communication module of the washing machine 6.

The controller 90 may open the second water supply valve 62b for a preset time based on reception of a user input for cleaning the filter 120. At this time, the water supply valve 62 may partially open.

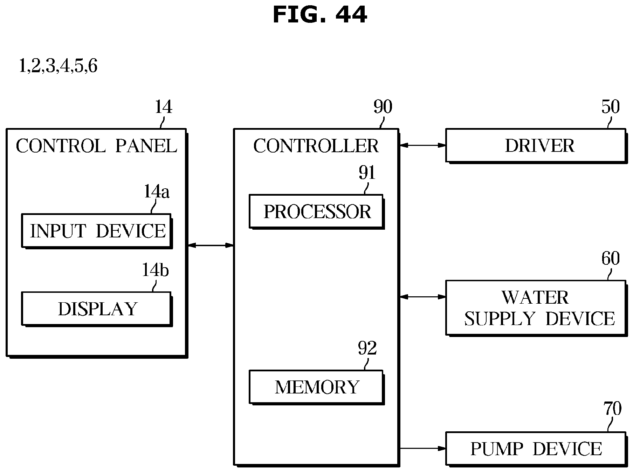

FIG. 44 is a control block diagram showing a configuration of a washing machine according to various embodiments.

Referring to FIG. 44, the washing machine 1, 2, 3, 4, 5, or 6 according to an embodiment may include the control panel 14 for interacting with a user, the driver 50 for rotating the drum 30, the water supply device 60 for supplying water to the tub 20, the pump device 70 for discharging water accommodated in the tub 20 to the outside, and the controller 90 for controlling various components of the washing machine 1. The control panel 14 may include the input device 14a and the display 14b, and operate based on a control signal from the controller 90.

The driver 50 may rotate the drum 30. The driver 50 may include diving circuitry for supplying driving current to the driving motor 51, and the driving circuitry may supply driving current to the driving motor 51 in response to a driving signal from the controller 90.

According to an embodiment, the driver 50 may include rectifier circuitry for rectifying alternating current power from an external power source, direct current link circuitry for removing ripples of the rectified power and outputting direct current power, inverter circuitry for converting the direct current power into sinusoidal driving power and outputting driving current to the driving motor 51, a current sensor for measuring the driving current that is supplied to the driving motor 51, and a gate driver for turning on/off a switching device included in the inverter circuitry based on a driving signal from the controller 90.

The water supply device 60 may provide water supplied from an external water source to the inside of the tub 20 based on a control signal from the controller 90.

The water supply device 60 of the washing machine 1, 2, or 3 according to an embodiment may include the water supply valve 62 provided in the water supply guide 61 to supply water to the water supply port 106.

According to various embodiments, the water supply valve 62 may be an electronic valve of which an opening rate is adjusted, or an on-off valve of which an opening rate is not adjusted.

Water supplied by the water supply device 60 of the washing machine 1, 2, or 3 according to an embodiment may flow into the detergent supply device 100, 200, or 300 through the water supply port 106, a part of water in the space between the case cover 105 and the case guide 107 may be discharged to the detergent accommodating portion 113 through the water supply hole 108, and another part of the water in the space between the case cover 105 and the case guide 107 may be discharged to the filter installing portion 116 through the washing hole 109.

The water supply device 60 of the washing machine 4, 5, or 6 according to an embodiment may include the first water supply valve 62a provided in the first water supply guide 61a to supply water to the first water supply port 406a, and the second water supply valve 62b provided in the second water supply guide 61b to supply water to the second water supply port 406b.

According to various embodiments, the first water supply valve 62a and the second water supply valve 62b may be on-off valves.

Water supplied through the first water supply guide 61a may flow into the detergent supply device 400, 500, or 600 through the first water supply port 406a and be guided into the water supply hole 108.

Water supplied through the second water supply guide 61b may flow into the detergent supply device 400, 500, or 600 through the second water supply port 406b and be guided into the washing hole 109.

The pump device 70 may include the circulation pump 71 and the drain pump 72. Water pumped by the circulation pump 71 of the pump device 70 of the washing machine 1, 3, 4, or 6 according to an embodiment may flow into the tub 20 via the detergent supply device 100, 300, 400, or 600.

Water pumped by the circulation pump 71 of the pump device 70 of the washing machine 2 or 5 according to an embodiment may flow into the tub 20 without passing through the detergent supply device 200 or 500.

Water pumped by the circulation pump 71 of the pump device 70 of the washing machine 2, 3, 5, or 6 according to an embodiment may be discharged to the outside via the detergent supply device 200, 300, 500, or 600.

Water pumped by the drain pump 72 of the pump device 70 of the washing machine 1 or 4 according to an embodiment may be discharged to the outside without passing through the detergent supply device 100 or 400.

The pump device 70 may be driven by a driving signal from the controller 90.

The controller 90 may include at least one memory 92 and at least one processor 91 for performing the above-described operations and operations which will be described below.

According to an embodiment, the controller 90 may include at least one memory 92 that stores data in the form of an algorithm and/or program for controlling operations of components in the washing machine 1, 2, 3, 4, 5, or 6, and at least one processor 91 that performs the above-described operations and operations which will be described below by using the data stored in the at least one memory 92. The memory 92 and the processor 91 may be implemented with separate chips. The processor 91 may include one, two, or more processor chips or one, two, or more processing cores. The memory 92 may include one, two, or more memory chips or one, two, or more memory blocks. Also, the memory 92 and the processor 91 may be implemented with a single chip.

The controller 90 may process a user input received through the input device 14a, and control various components (for example, the driver 50, the water supply device 60, the display 14b, and the pump device 70) of the washing machine 1, 2, 3, 4, 5, or 6 based on the processed result of the user input.

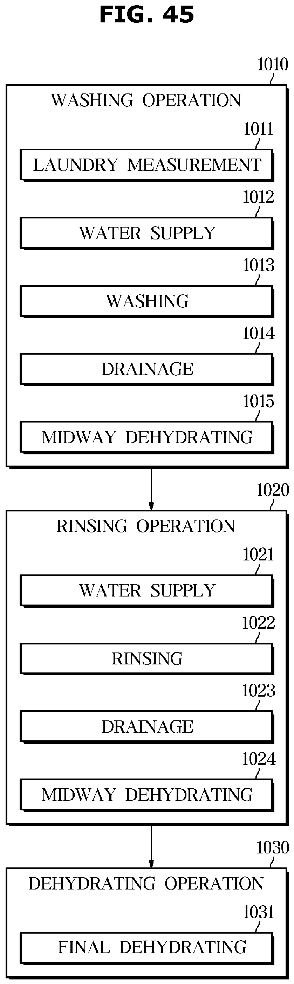

FIG. 45 shows an example of a washing cycle according to an embodiment.

Referring to FIG. 45, a washing cycle may include a washing operation 1010, a rinsing operation 1020, and/or a dehydrating operation 1030.

The washing machine 1, 2, 3, 4, 5, or 6 may perform the washing operation 1010, the rinsing operation 1020, and the dehydrating operation 1030 sequentially according to a user input through the input device 14a.

By the washing operation 1010, laundry may be washed. More specifically, foreign materials attached to the laundry may be separated from the laundry by chemical actions by a detergent and/or mechanical actions such as falling.

The washing operation 1010 may include laundry measurement 1011 of measuring an amount of laundry, water supply 1012 of supplying water to the tub 20, washing 1013 of rotating the drum 30 at low speed to wash laundry, drainage 1014 of draining water stored in the tub 20, and midway dehydrating 1015 of rotating the drum 30 at high speed to separate water from laundry.

For the laundry measurement 1011, the controller 90 may control the driver 50 to repeatedly turn on/off the driving motor 51, and measure a load (a weight of the laundry) in the drum 30 based on a counter electromotive force value generated upon turning-off of the driving motor 51.

For the water supply 1012, the controller 90 may control the water supply device 60 to provide water supplied from an external water supply source to the inside of the tub 20.

The controller 90 of the washing machine 1, 2, or 3 according to an embodiment may open the water supply valve 62 for the water supply 1012. The controller 90 of the washing machine 1, 2, or 3 according to an embodiment may close the water supply valve 62 based on satisfaction of a water supply termination condition.

According to the water supply valve 62 being implemented as an electronic valve of which an opening rate is adjusted, the controller 90 may fully open the electronic valve to supply water.

Water supplied to the detergent supply device 100, 200, or 300 through the water supply port 106 during the water supply 1012 may flow into the water supply hole 108 and the washing hole 109.

According to the disclosure, because water flows into the washing hole 109 during the water supply 1012, the filter 120 may be washed.

The controller 90 of the washing machine 4, 5, or 6 according to an embodiment may open the first water supply valve 62a for the water supply 1012. The controller 90 of the washing machine 4, 5, or 6 according to an embodiment may close the water supply valve 62a based on satisfaction of a water supply termination condition.

Water supplied to the water supply device 400, 500, or 600 through the first water supply port 406a during the water supply 1012 may flow into the water supply hole 108.

According to various embodiments, the controller 90 of the washing machine 4, 5, or 6 according to an embodiment may open the second water supply valve 62b for a preset time during the water supply 1012. A time for which the first water supply valve 62a opens during the water supply 1012 may be shorter than a time for which the second water supply valve 62b opens.

According to an embodiment, because water flows into the washing hole 109 during the water supply 1012, the filter 120 may be washed.

For the washing 1013, the controller 90 may control the driver 50 to rotate the driving motor 51 forward (for example, a clockwise direction) or backward (for example, a counterclockwise direction). By rotating the drum 30, laundry may fall from an upper area of the drum 30 to a lower area of the drum 30 and, by the falling, the laundry may be washed.

During the washing 1013, a circulation operation of causing water in the tub 20 to pass through the pump device 70 and again enter the tub 20 may be performed.

For the circulation operation, the controller 90 may drive the circulation pump 71 of the pump device 70. During the circulation operation, water pumped by the circulation pump 71 of the pump device 70 of the washing machine 1, 3, 4, or 6 according to an embodiment may flow into the tub 20 via the detergent supply device 100, 300, 400, or 600. According to a circulation operation in which water from which foreign materials have been removed flows into the tub 20, more efficient washing may be performed.

Meanwhile, in the washing machine 1, 3, 4, or 6 according to an embodiment, foreign materials may be collected in the filter 120 during a circulation operation.

For the drainage 1014, the controller 90 may drive the drain pump 72 of the pump device 70. Water pumped by the drain pump 72 of the pump device 70 of the washing machine 2, 3, 5, or 6 according to an embodiment during the drainage 1014 may be discharged to the outside via the detergent supply device 200, 300, 500, or 600. According to the drainage 1014 in which water from which foreign materials have been removed is discharged to the outside of the tub 20, environmental pollution may be prevented.

Meanwhile, in the washing machine 2, 3, 5, or 6 according to an embodiment, foreign materials may be collected in the filter 120 during the drainage 1014.

For the midway dehydrating 1015, the controller 90 may control the driver 50 to rotate the driving motor 51 at high speed. By the high-speed rotation of the drum 30, water may be separated from the laundry accommodated in the drum 30 and discharged to the outside of the washing machine 1, 2, 3, 4, 5, or 6.

By the rinsing operation 1020, the laundry may be rinsed. More specifically, a detergent or foreign materials remaining in the laundry may be washed away by water.

The rinsing operation 1020 may include water supply 1021 of supplying water to the tub 20, rinsing 1022 of driving the drum 30 to rinse laundry, drainage 1023 of discharging water stored in the tub 20, and midway dehydrating 1024 of driving the drum 30 to separate water from the laundry.

The water supply 1021, the drainage 1023, and the midway dehydrating 1024 of the rinsing operation 1020 may be the same as the water supply 1012, the drainage 1014, and the midway dehydrating 1015 of the washing operation 1010, respectively. Accordingly, descriptions about the water supply 1021, the drainage 1023, and the midway dehydrating 1024 of the rinsing operation 1020 will be omitted.

For the rinsing 1022, the controller 90 may control the driver 50 to rotate the driving motor 51 forward (for example, the clockwise direction) or backward (for example, the counterclockwise direction). By rotating the drum 30, the laundry may fall from the upper area of the drum 30 to the lower area of the drum 30 and, by the falling, the laundry may be rinsed.

During the rinsing 1022, a circulation operation of causing water in the tub 20 to pass through the pump device 70 and again enter the tub 20 may be performed.

For the circulation operation, the controller 90 may drive the circulation pump 71 of the pump device 70. During the circulation operation, water pumped by the circulation pump 71 of the pump device 70 of the washing machine 1, 3, 4, or 6 according to an embodiment may flow into the tub 20 via the detergent supply device 100, 300, 400, or 600. According to a circulation operation in which water from which foreign materials have been removed flows into the tub 20, more efficient rinsing may be performed.

By the dehydrating 1030, the laundry may be dehydrated. More specifically, water may be separated from the laundry by a high-speed rotation of the drum 30, and the separated water may be discharged to the outside of the washing machine 1.

The dehydrating operation 1030 may include final dehydrating 1031 of separating water from laundry by rotating the drum 30 at high speed. Due to the final dehydrating 1031, final midway dehydrating 1024 of the rinsing operation 1020 may be omitted.

For the final dehydrating 1031, the controller 90 may control the driver 50 to rotate the driving motor 51 at high speed. By the high-speed rotation of the drum 30, water may be separated from the laundry accommodated in the drum 30 and discharged to the outside of the washing machine 1, 2, 3, 4, 5, or 6. Also, a rotation speed of the driving motor 51 may increase in stages.

Because an operation of the washing machine 1, 2, 3, 4, 5, or 6 terminates by the final dehydrating 1031, a time for which the final dehydrating 1031 is performed may be longer than a time for which the midway dehydrating 1015 or 1024 is performed.

According to various embodiments, during the dehydrating operation 1030, a drain operation may be performed. For example, the controller 90 may operate the drain pump 72 of the pump device 70 during the dehydrating operation 1030.

In the disclosure, the circulation operation may be an operation in which the circulation pump 71 of the pump device 70 operates, and the drain operation may be an operation in which the drain pump 72 of the pump device 70 operates.

According to the disclosure, by discharging a part of water to the filter installing portion 116 through the washing hole 109 during the water supply 1012 or 1021, the filter 120 may be washed. By washing the filter 120 for each of the water supply 1012 or 1021, the life span of the filter 120 may increase, which improves a user's satisfaction.

According to various embodiments, an operation of washing the filter 120 may be performed even in the remaining operations except for the water supply 1012 or 1021.

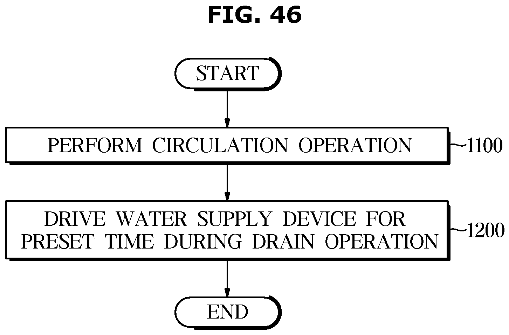

FIG. 46 is a flowchart illustrating an example of a control method of a washing machine according to various embodiments.

Referring to FIG. 46, the washing machine 1, 2, 3, 4, 5, or 6 according to an embodiment may perform a circulation operation during a washing cycle (1100). The controller 90 may drive the pump device 70 to perform the circulation operation. The circulation operation may be performed in a section of the washing operation 1010 or in a section of the rinsing operation 1020, as described above.

In the washing machine 1, 3, 4, or 6 according to an embodiment, water pumped by the circulation pump 71 of the pump device 70 during a circulation operation may flow into the tub 20 via the detergent supply device 100, 300, 400, or 600. Accordingly, upon completion of the circulation operation, foreign materials filtered out by passing through the filter portion 122 may be collected on the filter side 122a of the filter portion 122.

The washing machine 1, 3, 4 or 6 according to an embodiment may drive the water supply device 60 for a preset time during a drain operation (1200).

For example, the controller 90 of the washing machine 1 or 3 according to an embodiment may open the water supply valve 62 for the preset time during the drain operation.

According to the water supply valve 62 being implemented as an electronic valve of which an opening rate is adjusted, the controller 90 may partially open the electronic valve for the preset time during the drain operation. That is, the controller 90 may open the water supply valve 62 by a first opening rate during a water supply operation, and open the water supply valve 62 by a second opening rate for the preset time during a drain operation, wherein the first opening rate may be greater than the second opening rate.

According to the disclosure, by opening the water supply valve 62 during a drain operation, foreign materials collected on the filter side 122a during a circulation operation may be removed.

Also, according to the disclosure, by partially opening the water supply valve 62 during a drain operation, an amount of water that flows into the tub 20 may be reduced.

As another example, the controller 90 of the washing machine 4 or 6 according to an embodiment may open the second water supply valve 62b for the preset time during the drain operation.

According to the disclosure, by opening the second water supply valve 62b during a drain operation, foreign materials collected on the filter side 122a during a circulation operation may be removed.

The preset time may be set to be shorter than a time of the drain operation, and may be stored in the memory 92. For example, the preset time may be set to about 10 seconds, although not limited thereto.

According to the disclosure, by pushing foreign materials collected on the filter side 122a during the circulation operation to another side, an effect of extending the life span of the filter 120 may be expected.

Meanwhile, the washing machine 2 or 5 according to an embodiment may also drive the water supply device 60 for the preset time during a drain operation.

In the washing machine 2, 3, 5, or 6 according to an embodiment, because water flows into the filter 120 during a drain operation, foreign materials may flow to the filter side 122a.

While a water level of the tub 20 is high, a large amount of water may flow into the filter 120, and accordingly, even though the water supply valve 62 is opened, it may be difficult to efficiently remove foreign materials collected on the filter side 122a.

However, while a water level of the tub 20 is low, a small amount of water may flow into the filter 120, and the water may not reach the filter side 122a. Accordingly, by opening the water supply valve 62, foreign materials collected on the filter side 122a may be efficiently removed.

The controller 90 of the washing machine 2, 3, 5, or 6 according to an embodiment may wash the filter side 122a by opening the water supply valve 62 in the state in which an amount of water flowed into the filter 120 of the tub 20 is small during a drain operation.

According to an embodiment, based on a water level of the tub 20 being lower than a preset water level (for example, a reset water level) during a drain operation, the controller 90 of the washing machine 2, 3, 5, or 6 may open the water supply valve 62 or 62b for the preset time. To this end, the washing machine 1, 2, 3, 4, 5, or 6 may further include a water level sensor (not shown).

As another example, based on a load of the pump device 70 being smaller than a preset value during a drain operation, the controller 90 of the washing machine 2, 3, 5, or 6 may open the water supply valve 62 or 62b for the preset time.

As another example, based on elapse of a predefined time from a start time of a drain operation, the controller 90 of the washing machine 2, 3, 5, or 6 may open the water supply valve 62 or 62b for the preset time.

According to the disclosure, foreign materials collected on the filter side 122a may be efficiently removed during a drain operation.

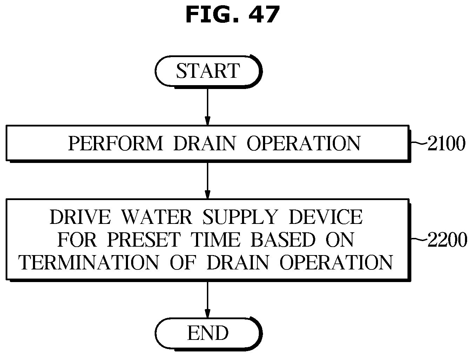

FIG. 47 is a flowchart illustrating an example of a control method of a washing machine according to various embodiments.

Referring to FIG. 47, the washing machine 1, 2, 3, 4, 5, or 6 according to an embodiment may perform a drain operation during a washing cycle (2100). The controller 90 may drive the pump device 70 to perform the drain operation. As described above, the drain operation may be performed in a section of a washing operation 1010 or in a section of a rinsing operation 1020.

In the washing machine 2, 3, 5, or 6 according to an embodiment, water pumped by the drain pump 72 of the pump device 70 during a drain operation may flow into the tub 20 via the detergent supply device 200, 300, 500, or 600. Accordingly, foreign materials filtered out by passing through the filter portion 122 during the drain operation may be collected on the filter side 122a of the filter portion 122.

As described above, the controller 90 of the washing machine 2, 3, 5, or 6 according to an embodiment may open the water supply valve 62 or 62b in the state in which an amount of water flowed into the filter 120 is small during a drain operation, thereby washing the filter side 122a.

The washing machine 2, 3, 5, or 6 according to an embodiment may drive the water supply device 60 for a preset time based on termination of the drain operation (2200).

Termination of the drain operation may be operation termination of the pump device 70.

That is, the washing machine 2, 3, 5, or 6 according to an embodiment may drive the water supply device 60 for the preset time based on operation termination of the pump device 70.

For example, the controller 90 of the washing machine 2 or 3 according to an embodiment may open the water supply valve 62 for the preset time based on termination of the drain operation.

According to the water supply valve 62 being implemented as an electronic valve of which an opening rate is adjusted, the controller 90 may partially open the electronic valve for the preset time based on termination of the drain operation. That is, the controller 90 may open the water supply valve 62 by a first opening rate during a water supply operation, and open the water supply valve 62 by a second opening rate for the preset time after a drain operation terminates, wherein the first opening rate may be greater than the second opening rate.

According to the disclosure, by washing the filter side 122a in the state in which a drain operation terminates, that is, in the state in which the filter side 122a is most contaminated, washing efficiency may be improved.

Also, according to the disclosure, by adjusting an opening rate of the electronic valve, an amount of water that flows into the tub 20 after a drain operation terminates may be reduced.

As another example, the controller 90 of the washing machine 5 or 6 according to an embodiment may open the second water supply valve 62b for the preset time based on termination of a drain operation.

According to the disclosure, by washing the filter side 122a in the state in which a drain operation terminates, that is, in the state in which the filter side 122a is most contaminated, washing efficiency may be improved.

Also, according to the disclosure, by opening only the second water supply valve 62b, an amount of water that flows into the tub 20 after a drain operation terminates may be reduced.

According to various embodiments, the washing machine 1 or 4 may also open the water supply valve 62 or 62b based on termination of a drain operation.

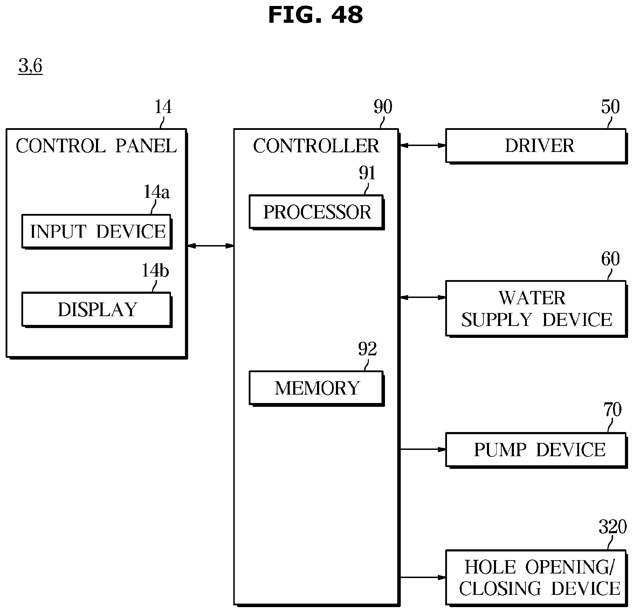

FIG. 48 is a control block diagram showing a configuration of a washing machine according to various embodiments.

Referring to FIG. 48, the washing machine 3 or 6 according to an embodiment may further include the hole opening/closing device 320 in addition to components described above with reference to FIG. 44.

The hole opening/closing device 320 may include the hole door 321, and the door driver 322 for operating the hole door 321. According to the hole opening/closing device 320 opening/closing the drawer hole 311a, the filter installing portion 316 may selectively communicate with the space between the drawer body 311 and the case body 301.

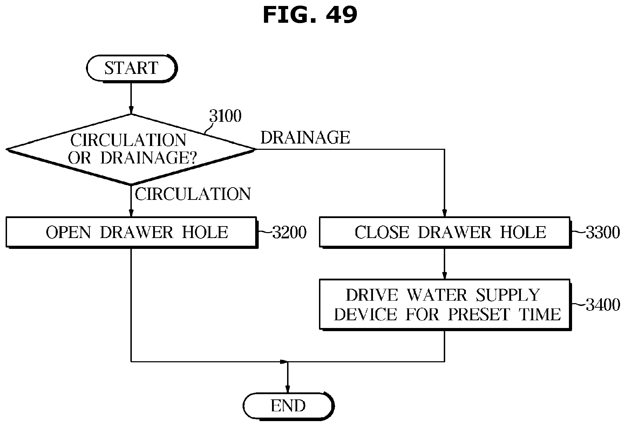

FIG. 49 is a flowchart showing an example of a control method of a washing machine according to various embodiments.

Referring to FIG. 49, the washing machine 3 or 6 according to an embodiment may open the drawer hole 311a during a circulation operation (circulation in 3100) (3200).

That is, the controller 90 of the washing machine 3 or 6 according to an embodiment may control the hole opening/closing device 320 to open the drawer hole 311a during the circulation operation (circulation in 3100) (3200).

The hole opening/closing device 320 may open the hole door 321 based on a control signal from the controller 90 during the circulation operation.

Accordingly, water passed through the filter 120 during the circulation operation may again flow into the tub 20 through the drawer hole 311a.

According to the disclosure, water passed through the filter 120 during the circulation operation may be guided to again flow into the tub 20.

Also, according to the disclosure, because the hole door 321 is positioned at an opposite side of a side to which water flows, a major part of water flowed into the inside space of the filter 120 by the pump device 70 may circulate to the tub 20 through the drawer hole 311a by pressure.

Meanwhile, the washing machine 3 or 6 according to various embodiments may further include a drain valve (not shown) for opening/closing the case outlet 304b or opening/closing the external guide 84.

In the case in which the washing machine 3 or 6 further includes a drain valve (not shown) for opening/closing the case outlet 304b or opening/closing the external guide 84, the controller 90 may close the drain valve during the circulation operation.

According to the disclosure, an amount of water that is discharged to the outside of the washing machine 3 or 6 during the circulation operation may be reduced.

The washing machine 3 or 6 according to an embodiment may close the drawer hole 311a during a drain operation (drainage in 3100) (3300).

That is, the controller 90 of the washing machine 3 or 6 according to an embodiment may control the hole opening/closing device 320 to close the drawer hole 311a during a drain operation (drainage in 3100) (3300).

The hole opening/closing device 320 may close the hole door 321 based on a control signal from the controller 90 during the drain operation.

Accordingly, water passed through the filter 120 during the drain operation may be discharged to the outside through the case outlet 304b.

According to the disclosure, water passed through the filter 120 during the drain operation may be guided to be discharged to the outside of the washing machine 3 or 6.

Meanwhile, as described above, the washing machine 3 or 6 according to an embodiment may drive the water supply device 60 for a preset time during the drain operation (3400).

For example, the controller 90 may wash the filter side 122a by opening the water supply valve 62 in the state in which an amount of water flowed into the filter 120 of the tub 20 is small during the drain operation.

As another example, the washing machine 3 or 6 according to an embodiment may drive the water supply device 60 for the preset time based on termination of the drain operation (3400).

For example, the controller 90 may open the water supply valve 62 or 62b for the preset time based on termination of the drain operation.

According to the disclosure, all of foreign materials of water that circulates during a circulation operation and foreign materials of water that is discharged during a drain operation may be removed by the filter 120.

Meanwhile, an operation of washing the filter 120 may be performed according to a command from a user.

According to an embodiment, the washing machine 1, 2, 3, 4, 5 or 6 may receive a user input for cleaning the filter 120.

The user input for cleaning the filter 120 may be received through the input device 14a of the control panel 14, or from an external device (for example, a user terminal) through the communication module of the washing machine 1, 2, 3, 4, 5 or 6.

The controller 90 may open the water supply valve 62 or 62b for a preset time based on reception of a user input for cleaning the filter 120.

The controller 90 of the washing machine 1, 2, or 3 according to an embodiment may open the water supply valve 62 for the preset time based on reception of a user input for cleaning the filter 120. At this time, the water supply valve 62 may partially open.

The controller 90 of the washing machine 4, 5, or 6 according to an embodiment may open the second water supply valve 62b for the preset time based on reception of a user input for cleaning the filter 120. At this time, the water supply valve 62 may partially open.

According to the disclosure, by performing an operation of cleaning the filter 120 according to a user's intention, the user's convenience may be improved.

So far, specific embodiments have been shown and described, however, the disclosure is not limited to these embodiments. It should be interpreted that various modifications may be made by one of ordinary skill in the technical art to which the disclosure belongs, without deviating from the gist of the technical concept of the disclosure, which is defined in the following claims.

## Claims

1. A washing machine comprising:
a housing;
a tub provided inside the housing;
a detergent supplier connected to the tub; and
a water supply guide configured to guide water to the detergent supplier,
wherein the detergent supplier comprises:
a drawer configured to accommodate a detergent;
a filter detachably installed in the drawer; and
a drawer case configured to accommodate the drawer, and
the drawer case comprises a washing hole configured to guide a part of water supplied to the drawer case to the filter and supply water to an outer side of the filter, the outer side being opposite to an inner side of the filter where foreign materials are collected.

2. The washing machine of claim 1, wherein
the drawer includes a detergent accommodating portion configured to accommodate the detergent, and
the drawer case includes a water supply hole configured to guide a part of water supplied to the drawer case to the detergent accommodating portion.

3. The washing machine of claim 2, further comprising a pump device configured to move water discharged from the tub to the tub,
wherein the filter is positioned to filter water moving from the pump device to the tub.

4. The washing machine of claim 3, wherein
the drawer case includes a tub port configured to discharge water supplied to the drawer through the water supply hole, together with a detergent, to the tub, and
the tub port is configured to guide water supplied to the filter through the washing hole to the tub.

5. The washing machine of claim 2, wherein the water supply guide is positioned closer to the washing hole than the water supply hole.

6. The washing machine of claim 1, further comprising:
a valve configured to open or close the water supply guide; and
a controller configured to control the valve,
wherein the controller is configured to open the valve for a preset time during a drain operation.

7. The washing machine of claim 6,
wherein the valve is an electronic valve of which an opening rate is adjusted, and
the controller is configured to
fully open the electronic valve during a water supply operation, and
partially open the electronic valve for the preset time during the drain operation.

8. The washing machine of claim 2, wherein
the water supply guide includes:
a first guide configured to guide water to the water supply hole; and
a second guide configured to guide water to the washing hole.

9. The washing machine of claim 8, further comprising:
a first valve configured to open or close the first guide;
a second valve configured to open or close the second guide; and
a controller configured to control the first valve and the second valve.

10. The washing machine of claim 9, wherein the controller is configured to open the second valve for a preset time based on reception of a user input to clean the filter.

11. The washing machine of claim 9, wherein the controller is configured to open the second valve for a preset time during a drain operation.

12. The washing machine of claim 9, further comprising:
a pump device configured to move water discharged from the tub to the tub,
wherein the filter is positioned to filter water moving from the pump device to the tub, and
the controller is configured to open the second valve for a preset time based on a termination operation of the pump device.

13. The washing machine of claim 2, wherein
the filter is positioned behind the detergent accommodating portion,
the water supply hole is positioned above the detergent accommodating portion, and
the washing hole is positioned above the filter.

14. The washing machine of claim 1, further comprising a pump device configured to move water discharged from the tub to outside of the housing,
wherein the filter is positioned to filter water moving from the pump device to the outside of the housing.

15. The washing machine of claim 14, wherein
the drawer case includes a case outlet configured to discharge water passed through the filter to outside of the drawer case, and
the case outlet is configured to guide water supplied to the filter through the washing hole to the outside of the drawer case.
